# EUROPEAN PATENT SPECIFICATION

(11) **EP 4 601 246 B1**
(45) Date of publication and mention of the grant of the patent: **11.03.2026**
(21) Application number: 25155495.2
(22) Date of filing: 03.02.2025
(51) Int. Cl.: H04L 9/40, G06Q 10/107, H04L 51/212, H04L 51/222

(54) **METHOD AND SYSTEM FOR USABLE PHISHING PREVENTIVE INFORMATION SYSTEMS**
VERFAHREN UND SYSTEM FÜR VERWENDBARE PRÄVENTIVE PHISHING-INFORMATIONSSYSTEME
PROCEDE ET SYSTEME POUR SYSTEMES D'INFORMATION PREVENTIVE D'HAMEÇONNAGE UTILISABLE

(30) Priority: 09.02.2024 IN 202421008938
(43) Date of publication of application: 13.08.2025
(73) Proprietor: Tata Consultancy Services Limited, Maharashtra (IN)
(72) Inventor: SHINDE, Sujit Raghunath, 400607 Thane, Maharashtra (IN); DOKE, Pankaj Harish, 400021 Mumbai, Maharashtra (IN); BHAVSAR, Karan Rajesh, 400607 Thane, Maharashtra (IN); KIMBAHUNE, Sanjay Madhukar, 400021 Mumbai, Maharashtra (IN)
(74) Representative: Goddar, Heinz J.

(56) References cited:
- US-B1- 9 686 308
- US-B2- 10 839 353
- US-B2- 11 349 868

## Description

### CROSS-REFERENCE TO RELATED APPLICATIONS AND PRIORITY

The present application claims priority to Indian application no. 202421008938, filed on February 9, 2024.

### TECHNICAL FIELD

The embodiments herein generally relate to the field of phishing prevention in information systems and, more particularly, to a method and system for providing usable phishing preventive information systems.

### BACKGROUND

Ease of internet access, smart phone availability has brought in exponential growth in communication over Internet Protocol (IP) based services. With large volumes of message exchanges via Internet Protocol (IP) based messaging, phishing attacks have penetrated the digital communication, taking advantage of vulnerabilities that the information technology system poses to users. Even though security techniques against phishing attacks have been developed and explored, users still fall prey to phishing attacks, specifically targeted through messages. This is mainly because end users are tricked to click bad links, or open infected attachments. "Time pressure", "work delivery pressure" and so on tend to put the user in speed reading mode. The intruders grab this opportunity where the user easily can misjudge the received message as an authentic message due to intentionally created name similarity between known and unknown sender friendly domain name. These, so called similar senders may trick around spelling variations, or character shapes and the like, which a user may fail to notice. Thus, to address the above concerns, one important aspect is to understand on human machine interaction challenges to provide effective solutions.

Various approaches are explored to identify such malicious senders sending phishing messages and warn or alert users (message receivers or viewers) against such messages. Senders Identity (ID) validations via Sender Profile Framework (SPF) Check, cross verification using blacklisted domain names (static list) are commonly used approaches to identify malicious sender. However, the attackers are ahead to find loopholes to get through these standard check mechanisms. Further, there are few works proposing various possible approaches that help to better identify phishing attack and indicate via audio visual phishing warning to user. However the technical solutions to rightly achieve them are not explored. Further, phishing preventive solutions generally are developed with the assumption that the user is technical literate. However, large population of developing countries that uses smart phones for communication is less literate, also referred to as Basic Emergent Users (BEUs).These BEUs have only a basic knowledge of accessing smart phones and applications on them. Limited knowledge of commonly used languages like English can be a potential loophole that provides scope to the attackers to easily carry out the phishing activities.

Exploring robust techniques for phishing attack detection with easily noticeable, interpretable, effective alert indication to the end user (receiver) is an open area of research. Furthermore, personalization in alert indication for effectively communicating an alert is critical considering variation is technological literacy levels of end users.

Usable security is a branch of security that focuses on preventing threats to user security and privacy that arise from the interaction of humans (users) with computer systems. Unlike traditional system and network security, it focuses on users, analyzing their behavior, mental models and decision-making processes and incorporate it in during security design. Thus, needed are robust usable security designs for information systems that collect, store, process and transmit data and digital information.

US patent US11349868 shows a computer implemented method for providing usable security. The method comprises initiating, for each message among a plurality of messages received from one or more senders, a Sender Profile Framework (SPF) check by checking records storing authorized domain names, executed by one or more hardware processors of a message exchange and communication server. A sender tagged as SPF-fail indicates that a domain name associated with the sender ID belongs to an unauthorized domain IP address, wherein a SPF stores a legal record of a plurality of domains and associated domain owner and organization details. The one or more hardware processors subsequently modify the records with a set of custom headers comprising a plurality of parameters associated with a sender device profile.

### SUMMARY

Embodiments of the present disclosure present technological improvements as solutions to one or more of the above-mentioned technical problems recognized by the inventors in conventional systems.

For example, in one embodiment, a method for usable phishing prevention is provided. The method includes initiating, for each message among a plurality of messages received from one or more senders associated with sender ID and geo-sensor equipped sender devices, a Sender Profile Framework (SPF) check by checking records storing authorized domain names, via a plugin usable security module executed by a message exchange and communication server, wherein the sender ID tagged as SPF-fail indicates that a domain name associated with the sender ID belongs to an unauthorized domain IP address, wherein a SPF stores legal record of a plurality of domains and associated domain owner and organization details.

Further, the method includes modifying the records with a set of custom headers comprising a plurality of parameters associated with a sender device profile, wherein the plurality of parameters comprising geocoding, device type, device type profile, sensor type, sensor type profile and accurate real-time positioning and timing services received from satellite agencies.

Further, the method includes analyzing, the one or more sender IDs tagged with SPF-fail in conjunction with one or more of the set of custom headers by performing one of:
(i) initiating a two factor authentication (2FA), if the message is associated with at least one of a mass mailer communication and an unauthorized domain IP address, the 2FA comprises: communicating with a domain owner, via a voice bot executing a Voice User Interface (VUI), based on information extracted from the contact details to confirm authorization of the unauthorized domain IP address, wherein the domain is classified as rogue if authorization is not confirmed; identifying the sender associated with rogue domain as malicious and quarantining the message; and communicating a legal notice to the domain owner via Voice user interfaces (VUIs) and over an email, wherein the legal notice is obtained from a legal expert using voice to text technique;
(ii) stripping body of the message, if the message does not belong to the mass mailer communication and does not have suspected domain name, and generating a checksum to derive presence of the mass mailer communication using checksum hit technique, wherein if the hits are beyond a threshold count obtain the legal notice using text to voice technique and communicate to the domain owner using Voice user interfaces (VUIs) and over the email, wherein the sender is identified as potentially malicious; and
(iii) if the domain IP address is detected to be mobile based on the geo code associated with the sender device present in the set of custom headers and captured in message header, then identify the sender as potentially malicious.

Further, the method includes processing the message using prompt engineering, by a first LLM in conjunction with a phishy-domain- permutations database, if the sender of the message is identified as potentially malicious, wherein the processing comprises:
(i) analyzing the message body to provide reasons for sender indicated as malicious, wherein the reasons are in natural language and machine interpretable language;
(ii) iteratively processing the reasons to generate short reasons excluding technical jargons to be embedded in the body of the message;
(iii) generating an image using text-to-Image models, wherein the image is indicative of potentially malicious mail and sentiment in the mail; and
(iv) including a warning indicating IP address is mobile and not fixed.

Furthermore, the method includes modifying the Document Object Module (DOM) instance for the message to incorporate the processed results of the LLM, wherein the message is displayed to a receiver on a receiver device with one or more phishing warnings, wherein the phishing warnings are displayed at the DOM nodes based on positions indicated by the LLM, and wherein phishing warnings in form of text message are displayed with change the font type face with kerning models as per a device form factor of a receiver device.

In another aspect, a system for usable phishing prevention is provided. The system comprises a memory storing instructions; one or more Input/Output (I/O) interfaces; and one or more hardware processors coupled to the memory via the one or more I/O interfaces, wherein the one or more hardware processors are configured by the instructions to initiate, for each message among a plurality of messages received from one or more senders associated with sender ID and geo-sensor equipped sender devices, a Sender Profile Framework (SPF) check by checking records storing authorized domain names, via a plugin usable security module executed by a message exchange and communication server, wherein the sender ID tagged as SPF-fail indicates that a domain name associated with the sender ID belongs to an unauthorized domain IP address, wherein a SPF stores legal record of a plurality of domains and associated domain owner and organization details.

Further, the one or more hardware processors are configured to modify the records with a set of custom headers comprising a plurality of parameters associated with a sender device profile, wherein the plurality of parameters comprising geocoding, device type, device type profile, sensor type, sensor type profile and accurate real-time positioning and timing services received from satellite agencies.

Further, the one or more hardware processors are configured to analyze, the one or more sender IDs tagged with SPF-fail in conjunction with one or more of the set of custom headers by performing one of:
(i) initiating a two factor authentication (2FA), if the message is associated with at least one of a mass mailer communication and an unauthorized domain IP address, the 2FA comprises: communicating with a domain owner, via a voice bot executing a Voice User Interface (VUI), based on information extracted from the contact details to confirm authorization of the unauthorized domain IP address, wherein the domain is classified as rogue if authorization is not confirmed; identifying the sender associated with rogue domain as malicious and quarantining the message; and communicating a legal notice to the domain owner via Voice user interfaces (VUIs) and over an email, wherein the legal notice is obtained from a legal expert using voice to text technique;
(ii) stripping body of the message, if the message does not belong to the mass mailer communication and does not have suspected domain name, and generating a checksum to derive presence of the mass mailer communication using checksum hit technique, wherein if the hits are beyond a threshold count obtain the legal notice using text to voice technique and communicate to the domain owner using Voice user interfaces (VUIs) and over the email, wherein the sender is identified as potentially malicious; and
(iii) if the domain IP address is detected to be mobile based on the geo code associated with the sender device present in the set of custom headers and captured in message header, then identify the sender as potentially malicious.

Further, the one or more hardware processors are configured to process the message using prompt engineering, by a first LLM in conjunction with a phishy-domain- permutations database, if the sender of the message is identified as potentially malicious, wherein the processing comprises:
(i) analyzing the message body to provide reasons for sender indicated as malicious, wherein the reasons are in natural language and machine interpretable language;
(ii) iteratively processing the reasons to generate short reasons excluding technical jargons to be embedded in the body of the message;
(iii) generating an image using text-to-Image models, wherein the image is indicative of potentially malicious mail and sentiment in the mail; and
(iv) including a warning indicating IP address is mobile and not fixed.

Furthermore, the one or more hardware processors are configured to modify the Document Object Module (DOM) instance for the message to incorporate the processed results of the LLM, wherein the message is displayed to a receiver on a receiver device with one or more phishing warnings, wherein the phishing warnings are displayed at the DOM nodes based on positions indicated by the LLM, and wherein phishing warnings in form of text message are displayed with change the font type face with kerning models as per a device form factor of a receiver device.

In yet another aspect, there are provided one or more non-transitory machine-readable information storage mediums comprising one or more instructions, which when executed by one or more hardware processors causes a method for usable phishing prevention. The method includes initiating, for each message among a plurality of messages received from one or more senders associated with sender ID and geo-sensor equipped sender devices, a Sender Profile Framework (SPF) check by checking records storing authorized domain names, via a plugin usable security module executed by a message exchange and communication server, wherein the sender ID tagged as SPF-fail indicates that a domain name associated with the sender ID belongs to an unauthorized domain IP address, wherein a SPF stores legal record of a plurality of domains and associated domain owner and organization details.

Further, the method includes modifying the records with a set of custom headers comprising a plurality of parameters associated with a sender device profile, wherein the plurality of parameters comprising geocoding, device type, device type profile, sensor type, sensor type profile and accurate real-time positioning and timing services received from satellite agencies.

Further, the method includes analyzing, the one or more sender IDs tagged with SPF-fail in conjunction with one or more of the set of custom headers by performing one of:
(i) initiating a two factor authentication (2FA), if the message is associated with at least one of a mass mailer communication and an unauthorized domain IP address, the 2FA comprises: communicating with a domain owner, via a voice bot executing a Voice User Interface (VUI), based on information extracted from the contact details to confirm authorization of the unauthorized domain IP address, wherein the domain is classified as rogue if authorization is not confirmed; identifying the sender associated with rogue domain as malicious and quarantining the message; and communicating a legal notice to the domain owner via Voice user interfaces (VUIs) and over an email, wherein the legal notice is obtained from a legal expert using voice to text technique;
(ii) stripping body of the message, if the message does not belong to the mass mailer communication and does not have suspected domain name, and generating a checksum to derive presence of the mass mailer communication using checksum hit technique, wherein if the hits are beyond a threshold count obtain the legal notice using text to voice technique and communicate to the domain owner using Voice user interfaces (VUIs) and over the email, wherein the sender is identified as potentially malicious; and
(iii) if the domain IP address is detected to be mobile based on the geo code associated with the sender device present in the set of custom headers and captured in message header, then identify the sender as potentially malicious.

Further, the method includes processing the message using prompt engineering, by a first LLM in conjunction with a phishy-domain- permutations database, if the sender of the message is identified as potentially malicious, wherein the processing comprises:
(i) analyzing the message body to provide reasons for sender indicated as malicious, wherein the reasons are in natural language and machine interpretable language;
(ii) iteratively processing the reasons to generate short reasons excluding technical jargons to be embedded in the body of the message;
(iii) generating an image using text-to-Image models, wherein the image is indicative of potentially malicious mail and sentiment in the mail; and
(iv) including a warning indicating IP address is mobile and not fixed.

Furthermore, the method includes modifying the Document Object Module (DOM) instance for the message to incorporate the processed results of the LLM, wherein the message is displayed to a receiver on a receiver device with one or more phishing warnings, wherein the phishing warnings are displayed at the DOM nodes based on positions indicated by the LLM, and wherein phishing warnings in form of text message are displayed with change the font type face with kerning models as per a device form factor of a receiver device.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1A and 1B illustrates a system for usable phishing prevention in an Internet Protocol (IP) messaging environment, in accordance with some embodiments of the present disclosure.
FIG. 1C is an architectural overview of the system for usable phishing prevention, in accordance with some embodiments of the present disclosure.
FIG. 2 is a functional diagram of the system for usable phishing prevention, in accordance with some embodiments of the present disclosure.
FIGS. 3A and 3B (collectively referred as FIG. 3) is a flow diagram illustrating a method for usable phishing prevention, using the system depicted in FIG. 2A and 2B, in accordance with some embodiments of the present disclosure.
FIGS. 4A through 7F explain stage by stage processing flow by the system for a sample email (Simple Mail Transfer Protocol - SMTP) received from a sender, wherein the system modifies the sample message to indicate phishing warning before sending it to a receiver, in accordance with some embodiments of the present disclosure.
FIGS. 8A and 8B are example interactive User Interface (UIs) with phishing warnings displayed to a receiver on receiver's device by the system for different types of phishing attack via potentially malicious emails detected by the system, in accordance with some embodiments of the present disclosure.
FIGS. 9A and 9B are example interactive User Interface (UIs) with warnings displayed to a receiver on receiver's device by the system for different types of phishing attack via potentially malicious chat messages detected by the system, in accordance with some embodiments of the present disclosure.
FIGS. 10A through 10D explain stage by stage processing flow by the system for a sample message (instant chat based on Extensible Messaging Presence Protocol-XMPP) received from a sender, wherein the system modifies the sample message to indicate phishing warning before sending it to a receiver, in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts.

Embodiments of the present disclosure provide a method and system for usable phishing preventive information systems. Information system is an integrated set of components for collecting, storing, and processing data and for providing information, knowledge, and digital products. Mobile phones (smart phones) carried by end users, the servers and the like are components of information systems involved in message communication. Message communication in information system is mainly based on the Internet Protocol (IP), for example a Simple Mail Transfer Protocol (SMTP) for email communication, Extensible Messaging and a Presence Protocol (XMPP) for instant messaging (IM) and the like used by chat applications.

While reading a message, for example the email, the end user (receiver) if is focused on reading the message, he or she may read the email thoroughly well to easily spot a maligned email. However, most of the time in a hurry or when distracted he may be in speed reading mode and completely overlooks minute signs that could help suspect the email. While in speed reading mode, the brain uses it is subconscious visual memory to recognize words by their shape, size and structure and ignore minute spelling errors. An intruder, also referred to as sender, exploits this human attribute to replace visually similar characters with bait domains and email-ids (sender identities (IDs)). The method and system disclosed herein analyzes and highlights suspicious indicators to the user to not visually overlook them while speed reading the emails. The highlights refer to phishing warnings are displayed based on suggestion by Large Language Model (LLM) so as to be in accordance with Usability Principles of Communications that require proximity of warning based on Gestalt principles. the ability of intent extraction using LLM is a recent development. People skilled in this aspect work in the domain of NLP and AI ML and Interaction Design.

Messaging based communication is a infrastructure services skillset. Works in this domain are focused on issues pertaining to communications and networks. Similarly technical focus in information security are primarily related to security aspects related to computing elements. Whereas works in the design domain focus only on visual aesthetics and visual design. Thus, a person with security background is unlikely to have design or LLM awareness to a larger extent, thus the method combines the LLM capabilities to security domain.

In some scenarios the suspicious emails may be legitimate emails and not intended to be blocked or quarantined, for example with non-deliberate spelling errors, the method highlights such indicators to the user and provide a medium to allow user to ascertain email's authenticity, by authenticating either sender's domain or embedded Uniform Resource Locator (URL) domains. Often such emails are sent in bulk and there could be several recipients receiving similar email with same content with changed salutation to the respective recipient. Hence, the method optimizes the two factor authentication (2FA) by caching (recording) the email content HASH and annotating it with the outcome of 2FA authentication. This approach enables to apply 2FA only once among all the recipients, reducing the processing overhead.

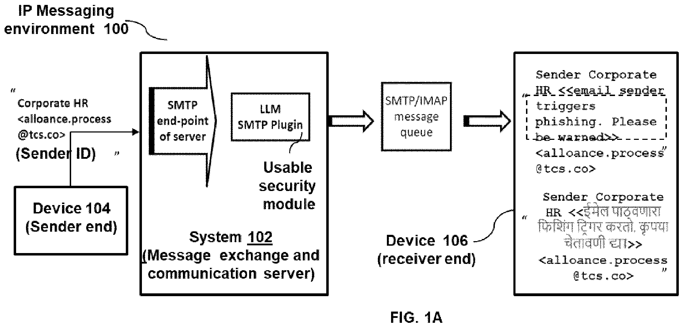

Referring now to the drawings, and more particularly to FIGS. 1A through 10D, where similar reference characters denote corresponding features consistently throughout the figures, there are shown preferred embodiments, and these embodiments are described in the context of the following exemplary system and/or method.

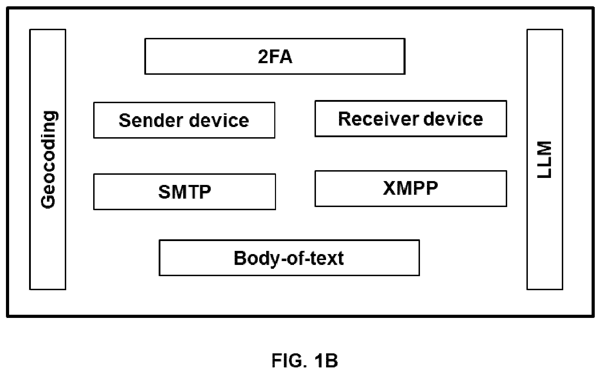

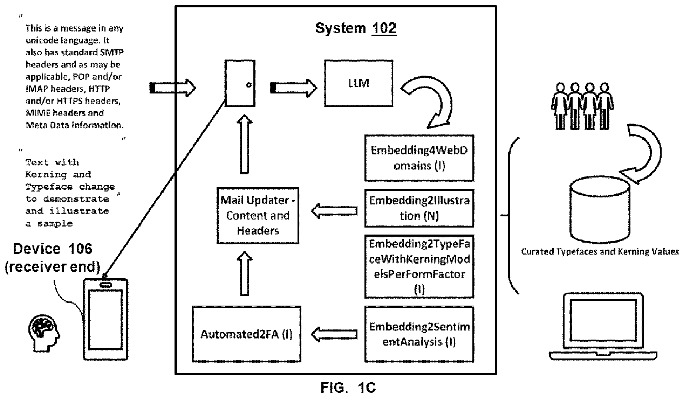

FIG. 1A and 1B illustrates a system 102 for usable phishing prevention in an Internet Protocol (IP) messaging environment 100, in accordance with some embodiments of the present disclosure. FIG. 1C is an architectural overview of the system 102 for usable phishing prevention, in accordance with some embodiments of the present disclosure.

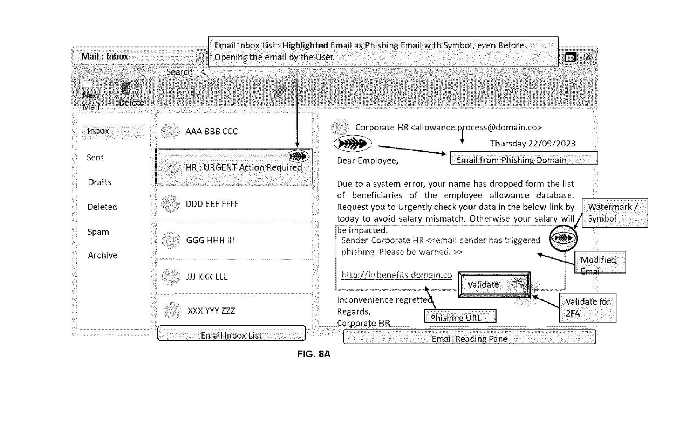

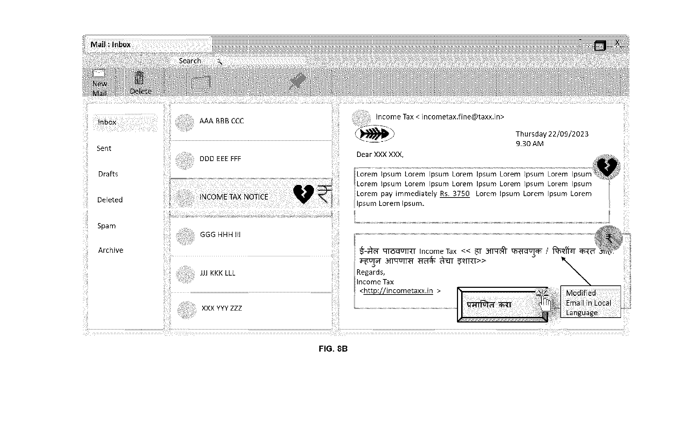

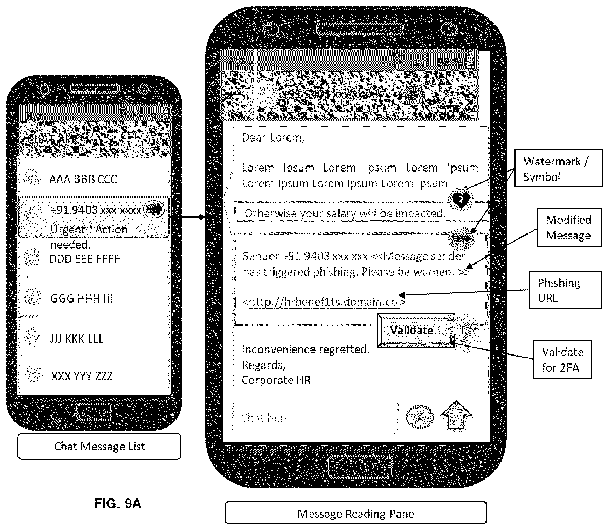

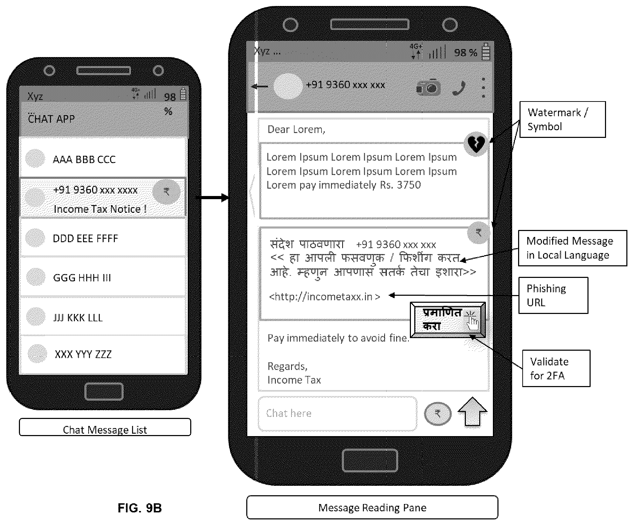

The system 102 herein includes a message exchange server executing a plugin usable security module while transferring messages between a sender and receiver enabled by communication channel set up between the device 104 (sender end device) to a device 106 ( receiver end device). The message exchange server can for example be a SMTP server, an IM server, and the like. The system and the method flow is explained herein with email as an example of IP based messaging and does not indicate a limitation of the IP based messaging types of the system 102 can handle. FIGS. 8A and 8B are example interactive User Interface (UIs) with phishing warnings displayed to a receiver on receiver's device by the system for different types of phishing attack via potentially malicious emails detected by the system, in accordance with some embodiments of the present disclosure. FIGS. 9A and 9B are example interactive User Interface (UIs) with warnings displayed to a receiver on receiver's device by the system for different types of phishing attack via potentially malicious chat messages detected by the system, in accordance with some embodiments of the present disclosure.

Phishing emails usually have spelling / grammatical errors, and or use incorrect or disguised domain names. The system 102 herein utilizes LLM with multilingual support to helps identify such phishing emails. For any such emails, the system 102 creates sufficient visual indication as seen in FIGS. 8A and 8B when the email (message) is read by a receiver (user) on his/her device 106. The system 102.
1. illustrates the email using relevant illustrations and / or emoticons in the notification bar of the phone or the desktop or web email client.
2. Change the font type face with kerning models as per the device form factor. By doing this disguised domain names or misspelled words can easily be noticed by the user. The technique to change font type face is as explained in applicant's granted patent titled *"Method and device for dynamic viewport generation to enhance viewport usability"* with US11132495B1 patent number at USPTO and not explained herein for brevity.
3. Uses sentiment analysis to identify if the email message is creating a sense of urgency for purported negative or positive event for the user.
4. Use sentiment analysis to also recommend 2FA based authentication. Thus allow user to establish credibility of the email.

In accordance with the above operations the system 102 updates email header and contents , to be displayed to user on device 106 so as to be distinguishably noticed by a reader (receiver).

The existing messaging systems do not modify the email (message) content, with visual illustration or with local language warnings highlighting false domains of phishing traps for the less literate users. The existing systems do not use generative Artificial Intelligence (such as the LLM used herein) for generating variations on authentic domains. Also the existing systems do not provide any 2FA ( explained in detail later) for validating the credibility of the email sender for Business to Business (B2B) as well as Business to Consumer (B2C).

For existing systems, the technical challenge in inserting warnings lies in finding the appropriate Document Object Module (DOM) node for insertion of "Warning" nodes in a pre-formatted phishing email for maximum effectiveness from user behavior point of view considering in accordance with Usability Principles of Communications that require proximity of warning based on Gestalt principles, which can be understood from information website https://digital.gov/communities/user-experience/#related-resources-2 Also, definitions for usability can be further understood in accordance with information provided at https://www.iso.org/obp/ui/#iso:std:iso:9241:-11:ed-2:v1:en.

It is critical for business to understand given a DOM what content in a phishing email should be added to effect behavior change in recipient of the email, and during technical implementation determine minimal number of nodes of the DOM for intended updating of the message.

Geo tracing of servers (sender device) for multi-factor authentication is used by the system. Currently, the scope of authentication is limited to cryptography based approaches such as certificates and CA. However, geotagging of servers as a multi-factor for authentication for emails is not currently in the State-of-the-Art (SOTA) approaches. Servers can be made mobile and mobile devices can be made servers. Multi-factor authentication of such scenarios is not present in the current SOTA. Servers can either be in Datacenter's or on Moving Vehicle.

As can be seen in FIGS. 8A through 9B example UI illustrations as displayed by system on user end devices (device 106) when user (receiver) reads the messages (email or chat messages form IM applications): The system provides:
1. Embedding to Illustration (Embedding2Illustration): Illustrates the email using relevant illustrations and / or emoticons in the notification bar of the phone or the desktop or web email client. Alternate Text and or audio is generated for accessibility towards Visual Impaired Users. Adaptable as it can be photographs instead of icons)
2. Embedding to Web Domain (Embedding2Webdomain): Phishing emails usually have spelling / grammatical errors, and or use incorrect or disguised domain names. Embodiments herein use LLM to help identify such phishing emails.
3. Embedding to Typeface (Embedding2TypeFace) with Kerning Models per Form Factor: Change the font type face with kerning models as per the device form factor. By doing this disguised domain names or misspelled words can easily be noticed by the user.
4. Embedding to Sentiment Analysis (Embedding2SentimentAnalysis): Uses sentiment analysis to identify if the email message is creating a sense of urgency for purported negative or positive event for the user.
5. Automated2FA: Use sentiment analysis to also recommend 2 factor authentication. Thus, allow users to establish credibility of the email.

The registry has contact [email, phone] of authorized person. As can be seen in FIG. 8A through 9B, for 2FA, the email (chat message) is updated to include a "validate" tap/click for automated 2FA on tapping it, an auto callback is generated to the registered number - where in a special key say hash, pound is pressed - this validates the email as authentic on the authorized person ( domain owner) side, an automated IVR is setup - which picks up a call and send a hash or pound key automatically - no human is required this email, if required, is auto-authenticated from the domain of the sender organization as is known, this system and number is not with intruder - hence 2FA will fail - so - the message will not be validated. This can be automated, or manual based on the budget of the receiver of the email who can accordingly initiate 2FA.

This architecture depicted in FIG. 1A and 1B can be applied to master-slave systems and also to peer-to-peer systems. The machine/system in the block diagram is a role which can be performed by the same or different devices.

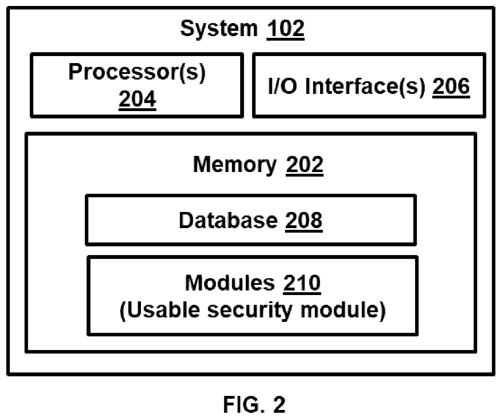

FIG. 2 is a functional diagram of the system 102 for usable phishing prevention, in accordance with some embodiments of the present disclosure. In an embodiment, the system 102 includes a processor(s) 204, communication interface device(s), alternatively referred as input/output (I/O) interface(s) 206, and one or more data storage devices or a memory 202 operatively coupled to the processor(s) 204. The system 102 with one or more hardware processors is configured to execute functions of one or more functional blocks of the system 102.

Referring to the components of system 102, in an embodiment, the processor(s) 204, can be one or more hardware processors 204. In an embodiment, the one or more hardware processors 204 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 204 are configured to fetch and execute computer-readable instructions stored in the memory 202. In an embodiment, the system 102 can be implemented in a variety of computing systems including laptop computers, notebooks, hand-held devices such as mobile phones, workstations, mainframe computers, servers, and the like.

The I/O interface(s) 206 can include a variety of software and hardware interfaces, for example, a web interface, a graphical user interface and the like and can facilitate multiple communications within a wide variety of networks N/W and protocol types, including wired networks, for example, LAN, cable, etc., and wireless networks, such as WLAN, cellular and the like. In an embodiment, the I/O interface (s) 206 can include one or more ports for connecting to a number of external devices or to another server or devices such as multiple sender devices (device 104) and multiple receiver devices such as device (106). Further, a GPS sensor is attached the message exchange and communication server via the I/O port (206)

The memory 202 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

In an embodiment, the memory 202 includes a plurality of modules 210 such as the usable security module (implemented as a plugin) that provides a 2FA module (not shown in FIG. 2), a first LLM (not shown) for message body modification functionality, a second LLM not shown) for generating phishy-domain- permutations database.

The plurality of modules 210 include programs or coded instructions that supplement applications or functions performed by the system 102 for executing different steps involved in the process of usable phishing prevention in information system. The plurality of modules 210, amongst other things, can include routines, programs, objects, components, and data structures, which performs particular tasks or implement particular abstract data types. The plurality of modules 210 may also be used as, signal processor(s), node machine(s), logic circuitries, and/or any other device or component that manipulates signals based on operational instructions. Further, the plurality of modules 210 can be used by hardware, by computer-readable instructions executed by the one or more hardware processors 204, or by a combination thereof. The plurality of modules 210 can include various sub-modules (not shown).

Further, the memory 202 may comprise information pertaining to input(s)/output(s) of each step performed by the processor(s) 204 of the system102 and methods of the present disclosure.

Further, the memory 202 includes a database 208. The database (or repository) 208 may include a plurality of abstracted pieces of code for refinement and data that is processed, received, or generated as a result of the execution of the plurality of modules in the module(s) 210. The database also includes the phishy-domain-permutations database, the personalized threat profile for each receiver.

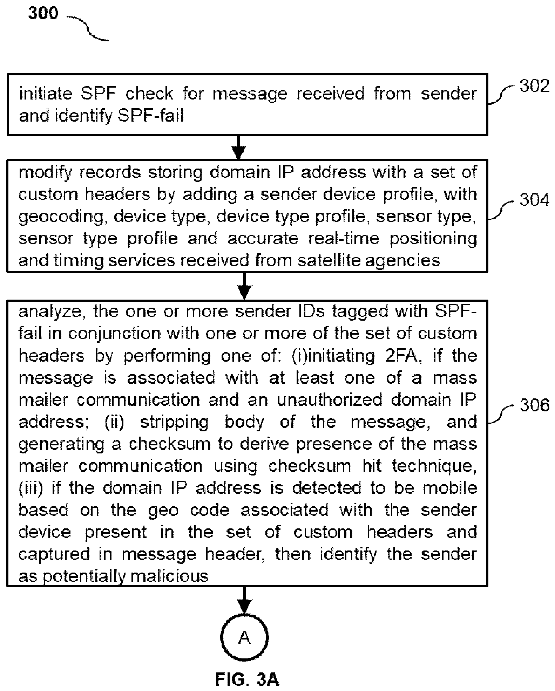

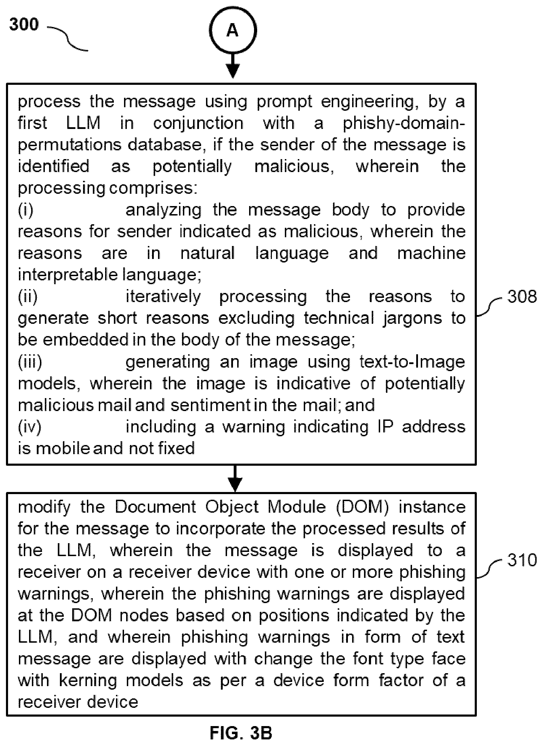

Although the database 208 is shown internal to the system 102, it will be noted that, in alternate embodiments, the database 208 can also be implemented external to the system 102, and communicatively coupled to the system 102. The data contained within such an external database may be periodically updated. For example, new data may be added into the database (not shown in FIG. 2) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 102 are now explained with reference to FIG. 3 through FIG. 9B.

FIGS. 3A and 3B (collectively referred as FIG. 3) is a flow diagram illustrating a method 300 for usable phishing prevention, using the system depicted in FIG. 2A and 2B, in accordance with some embodiments of the present disclosure.

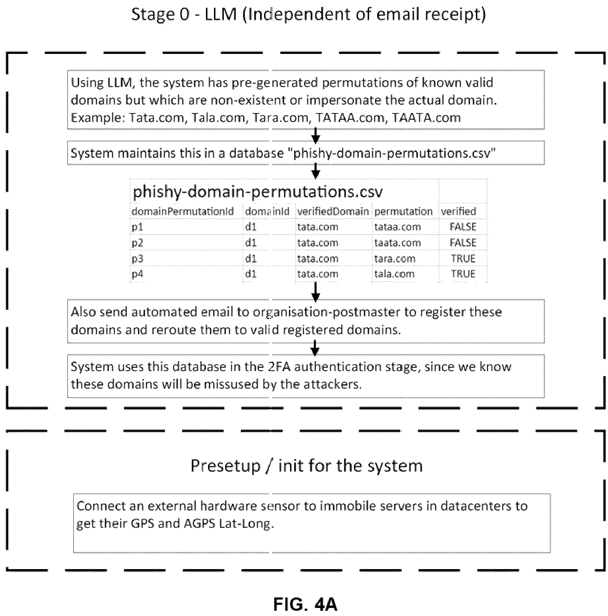

In an embodiment, the system 102 comprises one or more data storage devices or the memory 202 operatively coupled to the processor(s) 204 and is configured to store instructions for execution of steps of the method 300 by the processor(s) or one or more hardware processors 104. The steps of the method 300 of the present disclosure will now be explained with reference to the components or blocks of the system 102 as depicted in FIG. 1A and 1B, the steps of flow diagram as depicted in FIG. 3 and example of email (message) processing as depicted in FIGS. 4A through 7F. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

Referring to the steps of the method 300, at step 302 of the method 300, the one or more hardware processors 204 of the message exchange and communication server 102 ( system 102) by executing the plug-in usable security module are configured by the instructions to initiate, for each message among a plurality of messages received from one or more senders a Sender Profile Framework (SPF) check by checking records storing authorized domain names. The SPF check is a standard process used in the SMTP. An SPF record identifies the mail servers and domains that are allowed to send email on behalf of your domain. Receiving servers check your SPF record to verify that incoming messages that appear to be from your organization are sent from servers allowed by you. Domains can have one SPF record.

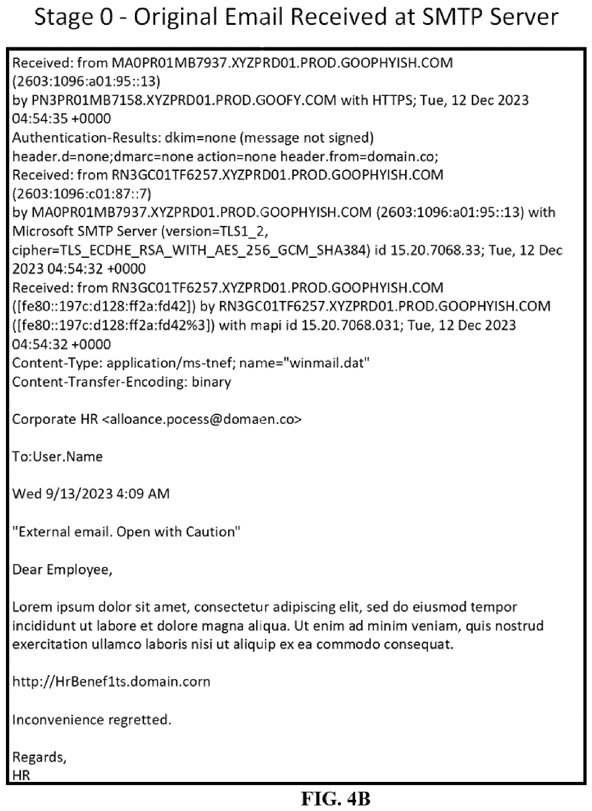

The example message type (email) as received is depicted in FIG. 4B (stage 0) process step of the method 300. As can be understood email is an example message type and the method 300 is equally applicable for IM type of messages using XMPP protocol for instant chat applications as depicted in FIG. 9A and 9B.

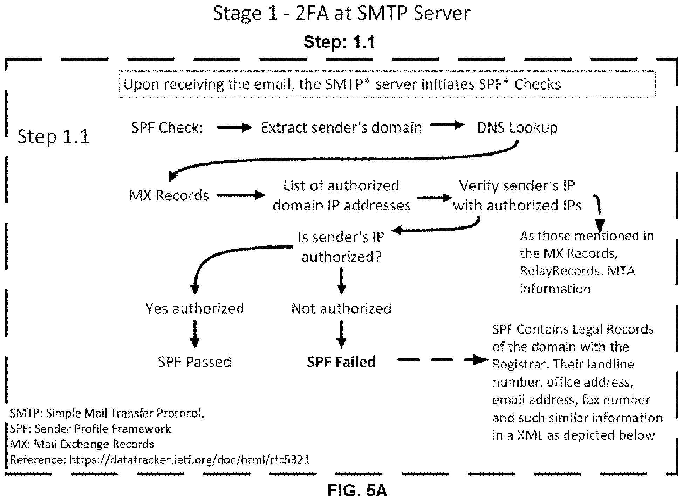

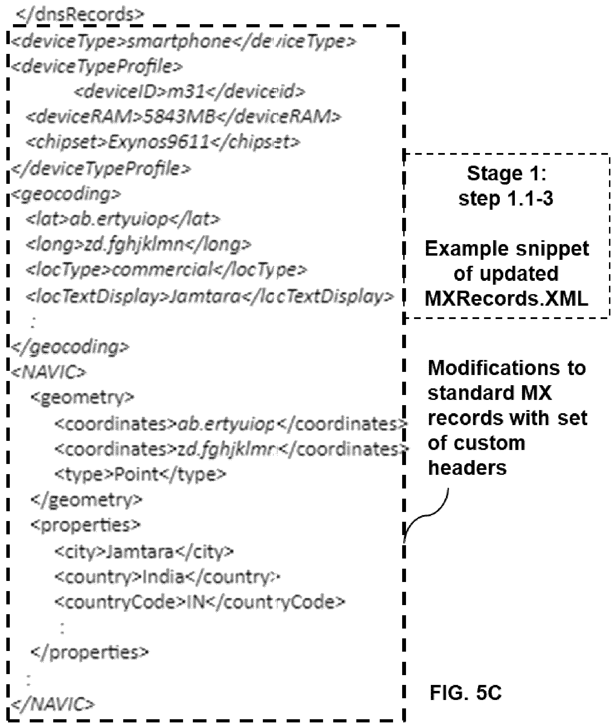

Each sender is associated with sender ID and geo-sensor equipped sender devices. The SPF check is depicted in detail in FIG. 5A. (Stage 1- step 1.1) wherein the sender ID tagged as SPF-fail indicates that a domain name associated with the sender ID belongs to an unauthorized domain IP address, wherein a SPF stores legal record of a plurality of domains and associated domain owner and organization details.

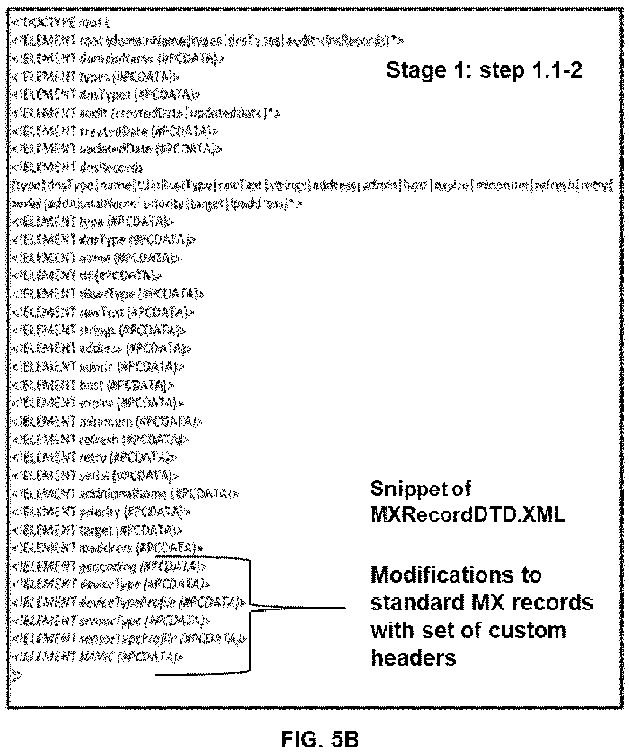

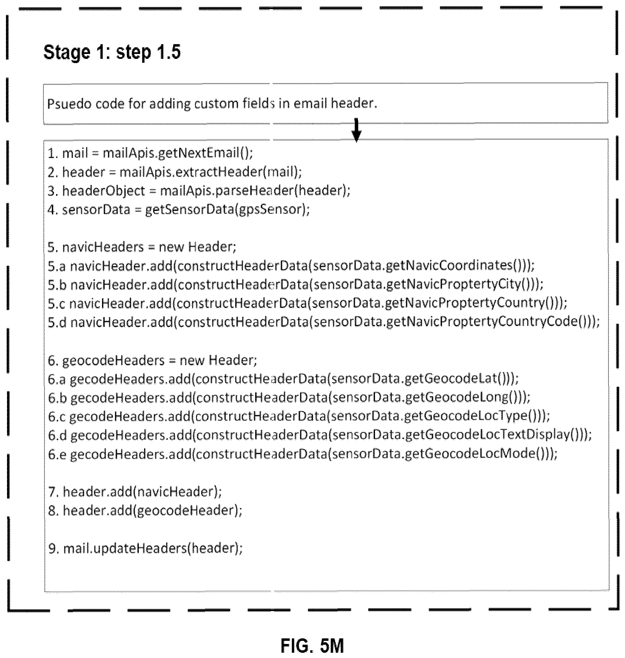

At step 304 of the method 300, the one or more hardware processors 204 of the message exchange and communication server 102 (system 102) by executing the plug-in usable security module are configured by the instructions to modify the records (for example Mail Exchange (MX) records if the messages are emails) with a set of custom headers comprising a plurality of parameters associated with a sender device profile. As depicted in MXRecordDTD.XML in FIG. 5B (stage 1- step 1.1-2) and 5C (stage 1- step 1.1-3) and flow diagram of FIG. 5M, the set of custom headers (also referred to as custom headers or custom fields in message header) are shown in italics and corresponding to the plurality of parameters comprising geocoding, device type, device type profile, sensor type, sensor type profile and accurate real-time positioning and timing services received from satellite agencies.

Generally, all device manufacturers give a device profile (herein referred to as sender device profile). For example, in case of Android^{™} phones, a logon to the developer portal of Google^{™} enables access to all Android world over which device details are provided, as depicted in example of Table 1A and 1B.

**Table 1A**

| Brand | Device | Manufacturer | Model Name | RAM (TotalMem) | Form Factor | System on Chip |
|---|---|---|---|---|---|---|
| samsing | m31 | Samsung | Galaxy M31 | 5843MB | Phone | Samsung Exynos 9611 |
| samsung | j6lte | Samsung | Galaxy J6 | 2948MB | Phone | Samsung Exynos 7870 |
| samsung | j7elte | Samsung | Galaxy J7 | 1437MB | Phone | Samsung Exynos 7580 |
| samsung | a02q | Samsung | Galaxy A02s | 3741MB | Phone | Qualcomm SDM450 |

**Table 1B**

| GPU | Screen een Sizes | Screen Dens ities | ABIs | Android SDK Versions | Open GL ES Versions | Install base | User-perceived ANR rate | User-perceived crash rate |
|---|---|---|---|---|---|---|---|---|
| ARM Mali G72 (1050 MHz) | 108 0x2 340 | 420 | arm64-v8a;armea bi;armeab i-v7a | 31 | 196610 | 2 | 0.00% | 0.00% |
| ARM Mali T830 (700 MHz) | 720 x14 80 | 320 | armeabi;a rmeabi-v7a | 29 | 196610 | 2 | 0.00% | 0.00% |
| ARM Mali T720 (668 MHz) | 720 x12 80 | 320 | armeabi;a rmeabi-v7a | 23 | 196609 | 1 | 0.00% | 0.00% |
| Qualcomm Adreno 506 (600 MHz) | 720 x16 00 | 280 | armeabi;a rmeabi-v7a | 31 | 196610 | 1 | 0.00% | 0.00% |
| ARM Mali G71 (1100 MHz) | 108 0x2 220 | 420 | arm64-v8a;armea bi;armeab i-v7a | 29 | 196610 | 1 | 0.00% | 0.00% |

In general devices use GPS for location tracking. However, the system 102 herein also provides use of NavIC^{™} system offered by satellite agency such as Indian Space Research Organization (ISRO). Thus, on-device sensor or GPS sensor attached as an external sensor to the device/machine/system 102 works with satellites constellations like GPS, NavIC^{™} to get device latitude and longitude (lat0long).

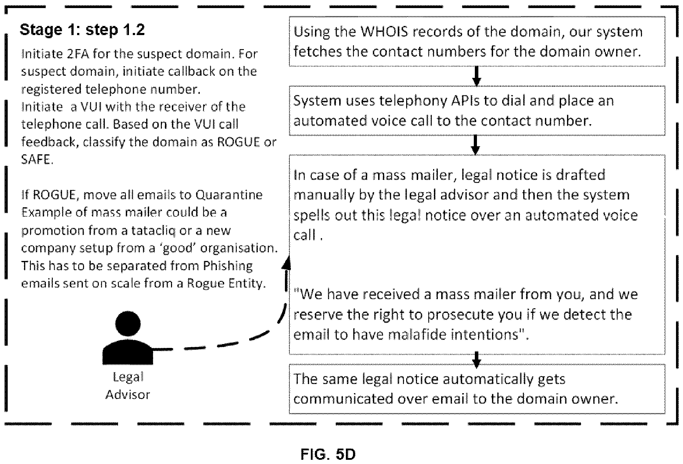

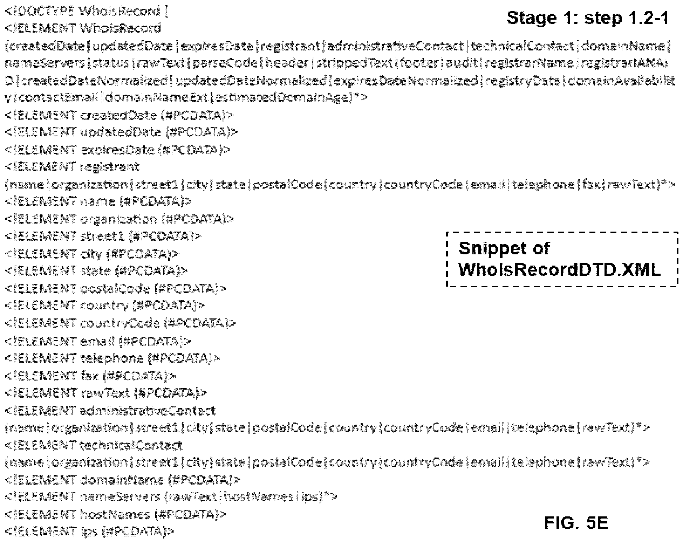

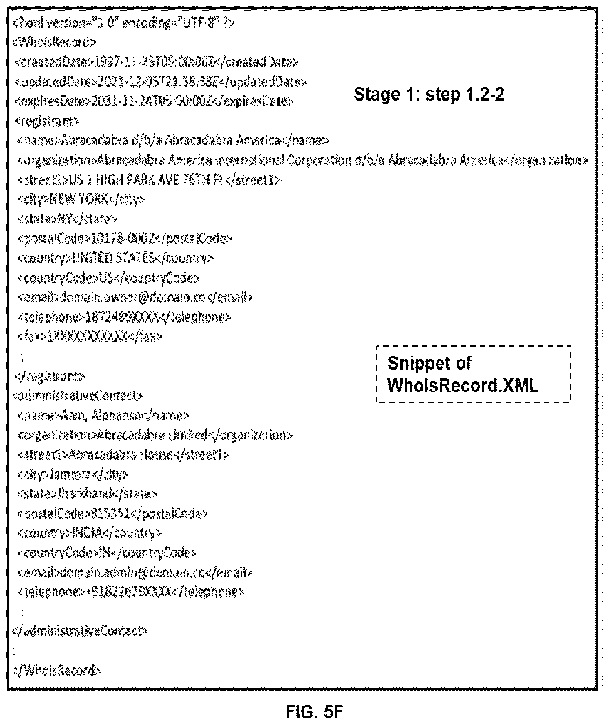

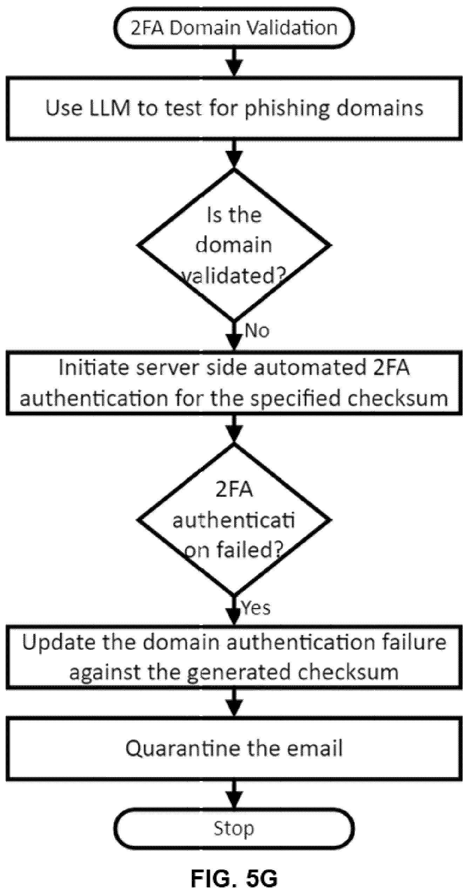

At step 306 of the method 300, the one or more hardware processors 204 of the message exchange and communication server 102 (system 102) by executing the plug-in usable security module are configured by the instructions to analyze, the one or more sender IDs tagged with SPF-fail in conjunction with one or more of the set of custom headers to check. The analysis is performed using at least one of the following steps as below ( also depicted in flow diagram of FIG. 5G-1):
(i) Initiate a two factor authentication (2FA) as depicted in stage FIG. 5D (stage1- step 1.2) if the message is associated with at least one of a mass mailer communication and an unauthorized domain IP address. There are well known approaches used to detect a mass mailer such as detecting one of:
One sender domain - 1 IP and many receivers.
One sender domain - N IP and many receivers.
(Above characterized by timestamps been in vicinity or same)
The 2FA comprises (also depicted in flow diagram of FIG. 5G):
- Communicating with a domain owner, via a voice bot executing a Voice User Interface (VUI), based on information extracted from the contact details to confirm authorization of the unauthorized domain IP address. For example for the email service this contact information is obtained from a Whois^{™} Record as depicted in FIG. 5E and 5F. The Whois record, well known and used, contains all of the contact information associated with the person, group, or company that registers a particular domain name. Typically, each Whois is a query and response protocol that is used for querying databases that store an Internet resource's registered users or assignees. It contains information such as the name and contact information of the Registrant (who owns the domain), the name and contact information of the Registrar (the organization or commercial entity that registered the domain name), the registration dates, the name servers, the most recent update, and the expiration date. Whois records may also provide the administrative and technical contact information (which is often, but not always, the registrant). Further, the domain is classified as rogue if authorization is not confirmed based on Whois record.
- Identifying the sender associated with rogue domain as malicious and quarantining the message
- Communicating a legal notice to the domain owner via Voice user interfaces (VUIs) and over an email, wherein the legal notice is obtained from a legal expert using voice to text technique.
- FIG. 5E - stage 1- step 1.2-1 and FIG. 5F - stage 1- step 1.2-1 depict WhoIsRecordDTD.XML and WholsRecord.XML for 'example email message type' respectively.

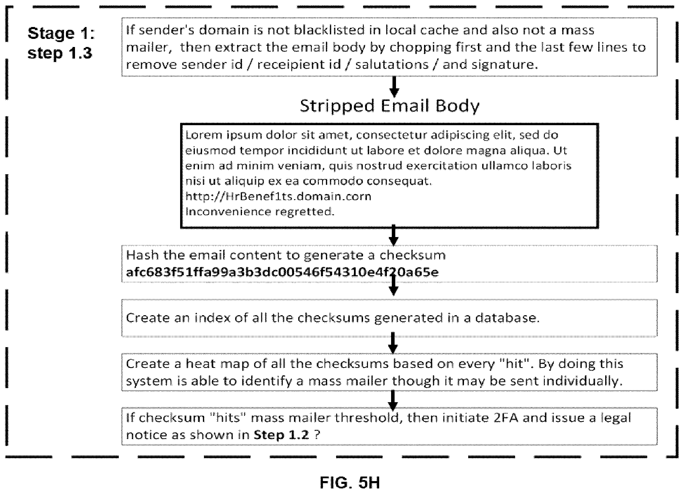

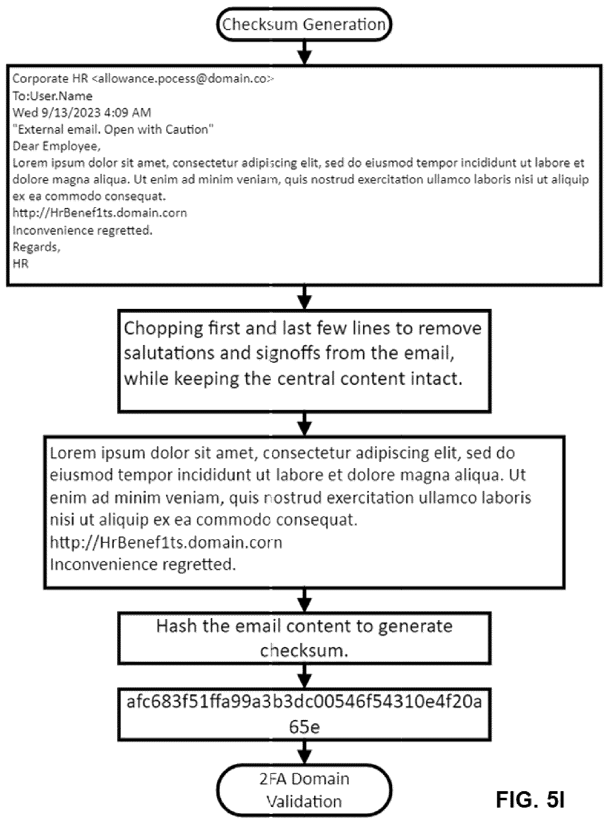

(ii) However, if the message does not belong to the mass mailer communication and does not have suspected domain name, the body of the message is stripped. Further, as depicted inflow diagram of FIG. 5H and 5I a checksum is generated from the stripped content of the body to derive presence of mass mailer using checksum hit technique (explained with help of example in Table 2). A heat map of hits is created to check if the hits are beyond a threshold count. If the hits exceed the threshold count, the message (email) is identified as the mass mailer communication and the legal notice is obtained using text to voice technique and communicate to the domain owner using Voice user interfaces (VUIs) and over the email, wherein the sender is identified as potentially malicious.

**Table 2**

| hash Id | hash | receiver Id | hitCo unter | domain | MXR ecords | WHOISRe cords | 2FA | rogue |
|---|---|---|---|---|---|---|---|---|
| AB | afc683f51ffa99a 3b3dc00546f543 10e4f20a65e | AB_receivers.csv | 533 | domain. co, domane. com | AB-MXR. XML | AB-WHOISRe cords.XM L | verified | T R U E |
| CD | bfe6a3f51ffa9bc 3b3dc00546f543 10e4f20a44f | CD_receivers.c sv | 1 | XY.com , XXY.net, PXY.org | CD-MXR. XML | CD-WHOISRe cords.XML | not-verified | F A LS E |
| EF | 2ce5a3f5lffa967 3b3dc00546f543 10e4f20a43d | EF_receivers.c sv | 52 | XZ.com | EF-MXR. XML | EF-WHOISRe cords.XML | verified | F A LS E |

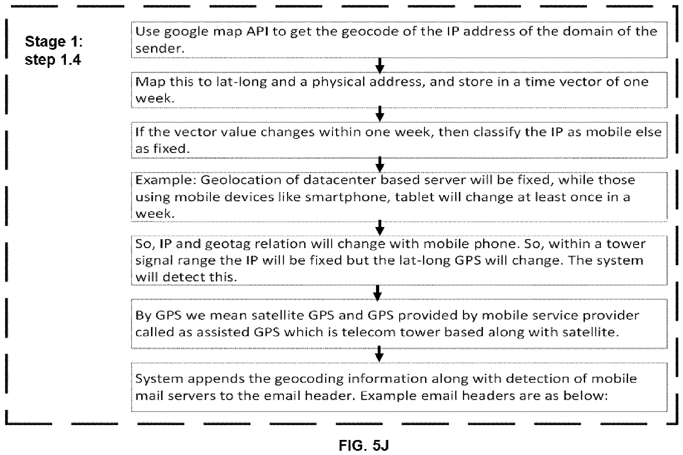

(iii) If the domain IP address is detected to be mobile based on the geo code associated with the sender device present in the set of custom headers and captured in message header, then identify the sender as potentially malicious. NAVIC and /or GPS is used to get lat-long of sender devices (device 104) used for sending email/messages. The sender device profile helps to collect the specifics of the attackers and the attacker hardware inventory can be profiled accordingly. The domain IP address is identified to be mobile if the geo codes of the sender device when mapped to a physical address and latitude longitude stored in as a time vector varies within a predefined time period such as 1 week, 2 weeks and so on. Explained is the logical reasoning to decide on the time period. The same is depicted in flow diagram of FIG. 5J

It can be understood that when the device is mobile, the device (smart phone) is assigned a IP address via a Dynamic Host Configuration Protocol (DHCP) and does not get a static IP address. DHCP IP addresses have a 'lease' - that is time validity, after which they expire and hence require renewal or reissuance. These are automatically handled by the TSP (telecom service provider) in mobile use cases. Also as the devices move between Towers - Cell Locations - there is handover on the IP stack, and IP addresses can change - but migration of data connection takes place.

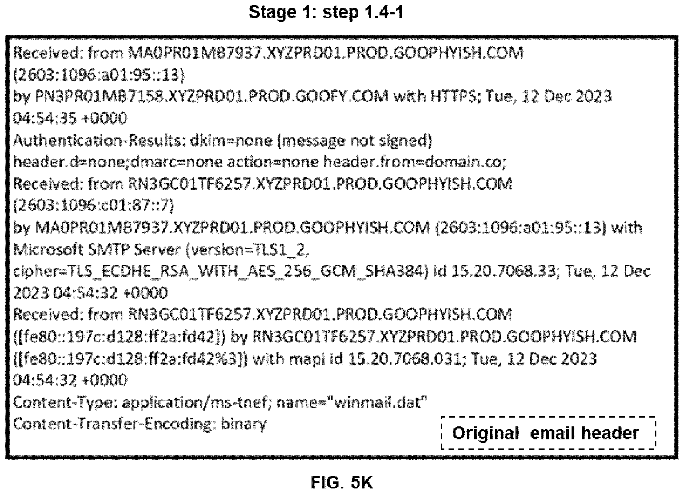

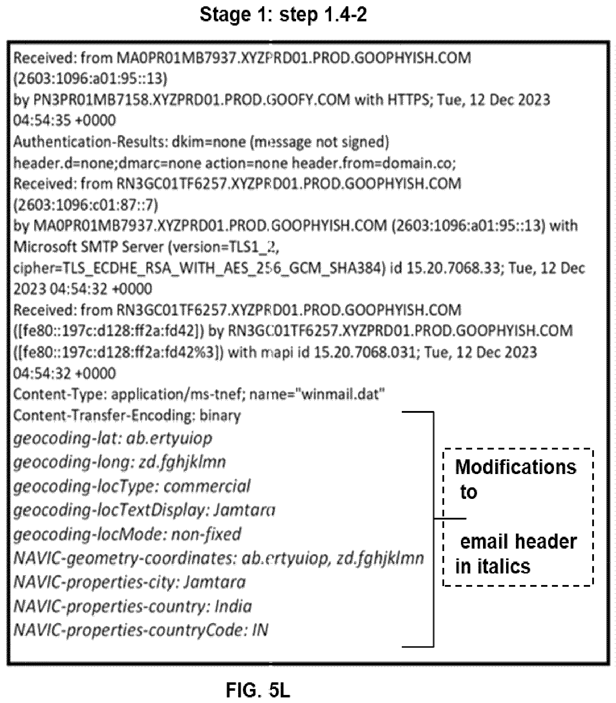

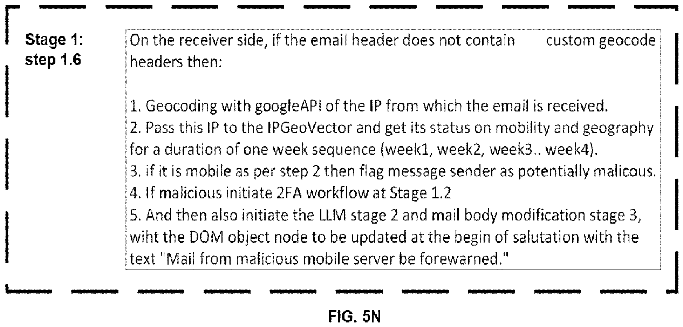

Thus, the usable security module of the system 102 utilizes a time vector to detect changes in IP addresses. Thus, DHCP IP if changes indicates the sender device (s) 104 are mobile devices. In certain cases, GPS can be spoofed. If the device profile is known then whether GPS is spoofed can be speculated to a degree. Apps in Indonesia for example spoof device / GPS locations. If a geo field to record the geo codes in the set of custom headers (custom fields) are absent, an API is used to approximate the geo field for the geo codes as depicted in flow diagram of FIG. 5N. Modifications made by the system 102 (usable security module) to the original email header of FIG. 5K are shown in FIG. 5L.

At step 308 of the method 300, the one or more hardware processors 204 of the message exchange and communication server 102 (system 102) by executing the plug-in usable security module are configured by the instructions to process the message using prompt engineering, by the first LLM in conjunction with the phishy-domain- permutations database if the sender of the message is identified as potentially malicious. The phishy-domain- permutations database is pre-generated database as shown in FIG. 4A (stage 0 of the method 300) and include steps as explained below: Step 1: Pre-generate, via the second LLM using prompt engineering, permutations of valid non-existent or impersonate domain names in conjunction with each valid domain name and store in the phishy-domain- permutations database. An example
**Prompt:**
   "Give generic phonetic and visually similar with typeface domain strings representative of Tata.com"
**Response:** ( for example from LLM such as ChatGPT^{™})
"Phonetically: tata.com Visually: tafa.com".

This is done with string matching algorithms which match the permutation string with the senders domain string.

Examples of phishy-domains generated are provided in Table 3 below and also depicted in FIG. 4A ( Stage 0- LLM ( second LLM )).

**Table 3**

| phishy-domain-permutations.csv | | | | |
|---|---|---|---|---|
| domainPermutationId | domainId | verifiedDomain | permutation | verified |
| p1 | d1 | tata.com | tataa.com | FALSE |
| p2 | d1 | tata.com | taata.com | FALSE |
| p3 | d1 | tata.com | tara.com | TRUE |
| p4 | d1 | tata.com | tala.com | TRUE |

Step 2: Generate a textual and voice communication to the domain owner of each of the valid domain name requesting to register associated permutations of valid non-existent or impersonate domain names and reroute them to valid domain names. The phishy-domain- permutations database is used during the reasoning analysis of LLM to check for presence of invalid domain in the sender domain name.

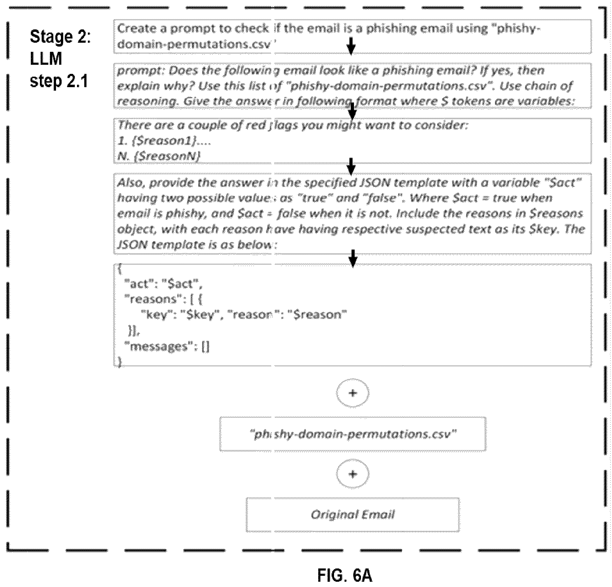

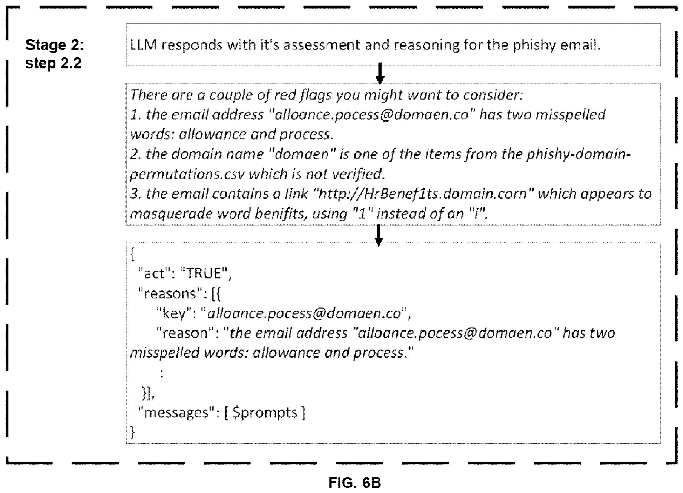

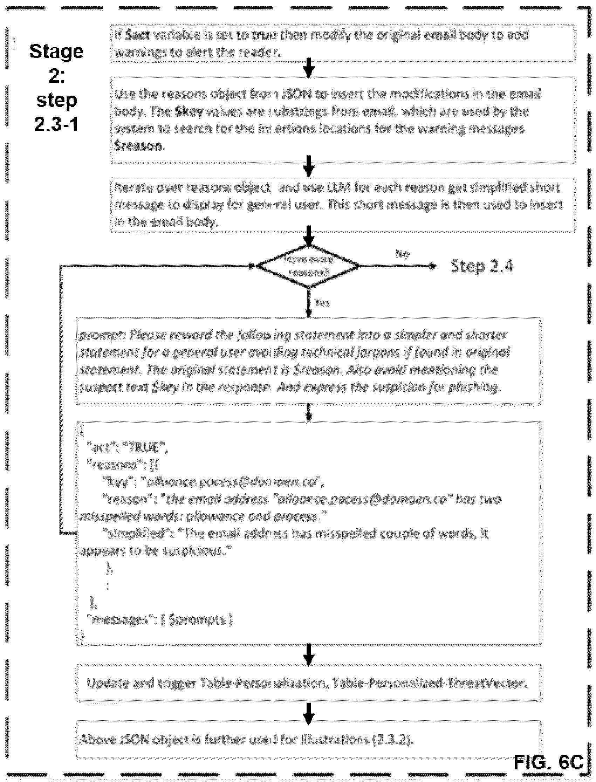

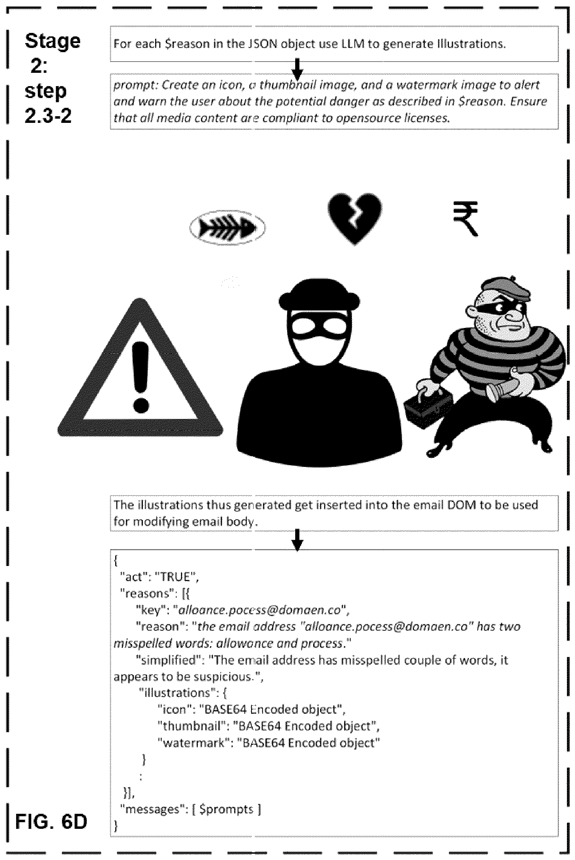

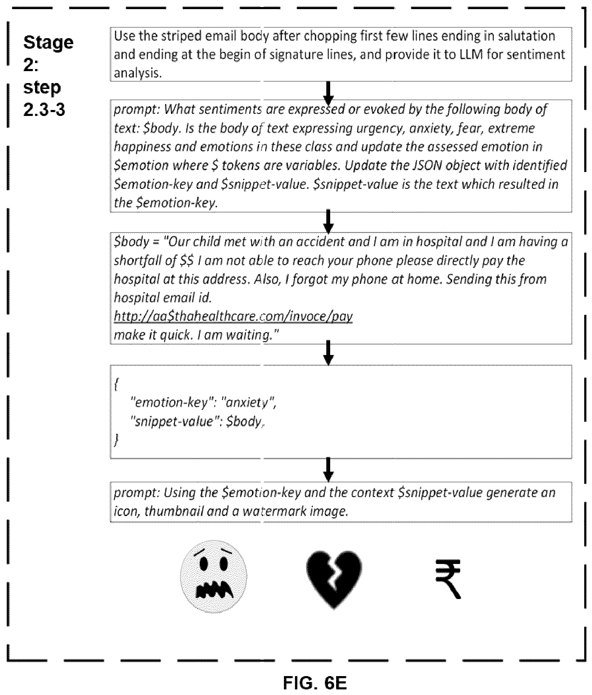

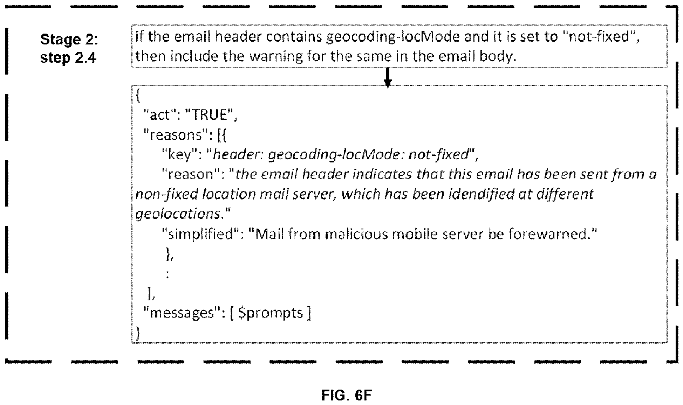

The processing of the message at stage 2 of the method 300 (for example the received email as in FIG. 4B) using prompt engineering, by the first LLM in conjunction with the phishy-domain- permutations database is explained in conjunction with FIGS. 6A: stage 2-step2.1, 6B: stage 2-step 2.2, 6C, 6D and 6E, stage 2-step 2.3-1, 2,3-2 and 2.3-3 and FIG. 6F: stage 2-step 2.4 respectively. The LLM processing comprises:
(i) Analyzing the message body to provide reasons for sender indicated as malicious, wherein the reasons are in natural language and machine interpretable language.
(ii) Iteratively processing the reasons to generate short reasons excluding technical jargons to be embedded in the body of the message.
(iii) Generating an image using text-to-Image models (for example StableDiffusion), wherein the image is indicative of potentially malicious mail and sentiment in the mail.
(iv) Including a warning indicating IP address is mobile and not fixed.

At step 310 of the method 300, the one or more hardware processors 204 of the message exchange and communication server 102 (system 102) by executing the plug-in usable security module are configured by the instructions to modify the Document Object Module (DOM) instance for the message to incorporate the processed results of the first LLM. The message is displayed to a receiver with one or more phishing warnings, wherein the phishing warnings are displayed at the DOM nodes based on positions indicated by the first LLM. The positions for the phishing warning indicated by the LLM are in accordance with Usability Principles of Communications that require proximity of warning based on Gestalt principles.). The Usability principle that the usable security module takes into consideration for positioning of the phishing warnings is explained below. User's cognition notices things when they are physically in co-location and ascribe them to the same meaning. For example, a book with a visual on the first page and the text related to it somewhere in the middle of the book. The user will not be able to assign meaning to them as a 'unit'. However, if the same text is immediately below the visual - then the brain treats the text and visual as 'one unit'. It is how the cognitive brain works for a human, and then is applied by the LLM suggestions on positioning of phishing warnings.

LLM used herein, for example can be any opensource LLMs which are listed on portals such as hugginface.co or github.com or propriety LLMs like Anthropic.

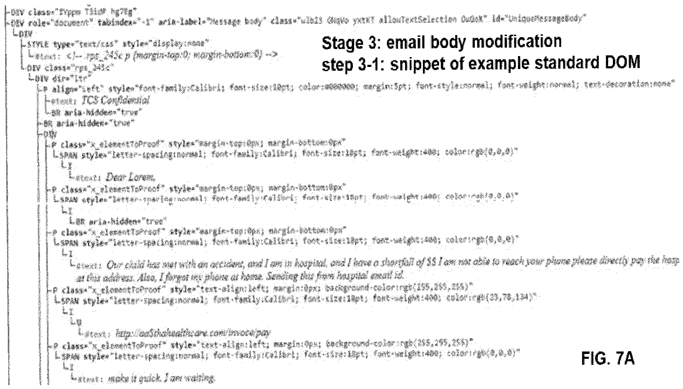

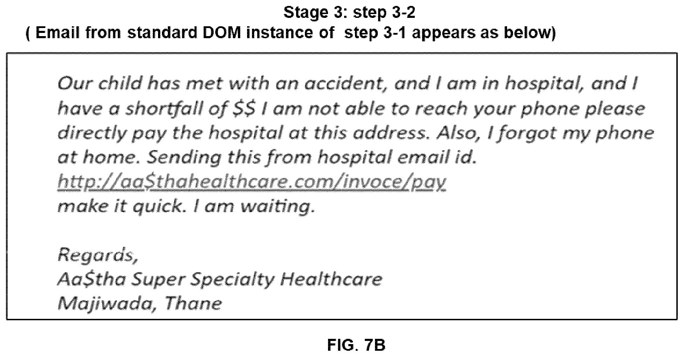

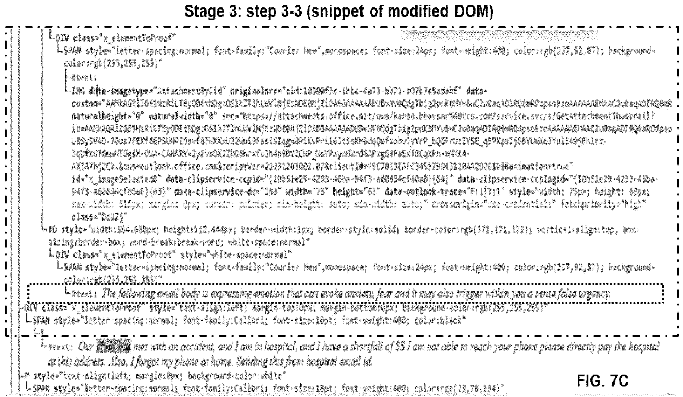

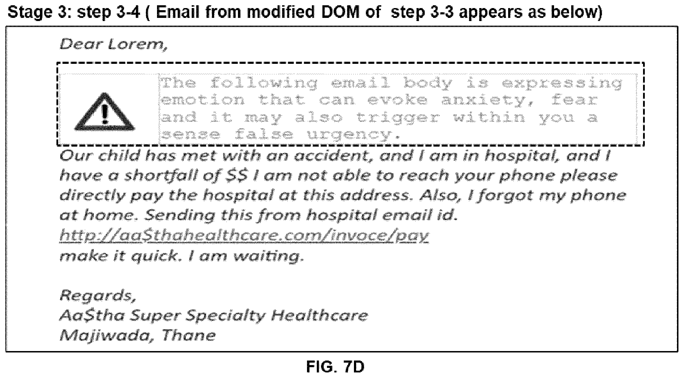

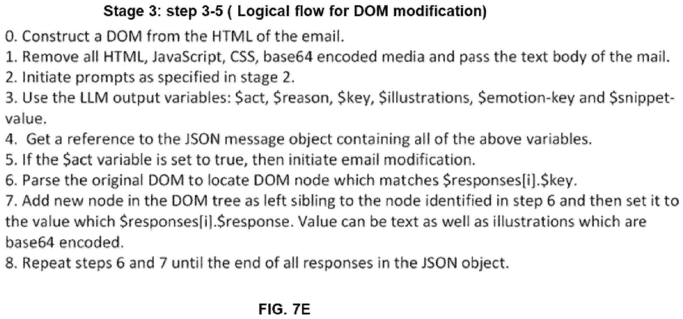

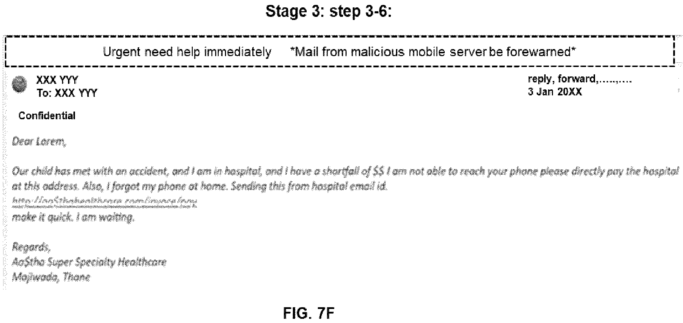

Stage 3 of the method process corresponds to DOM instance modification to modify email body (message body). Step 3-1 of stage 3 as depicted in FIG. 7A is example standard Document Object module (DOM) for an email and corresponding email as displayed appears as in FIG. 7B. The modified DOM is depicted in FIG. 7C with enclosed dotted lines, with phishing warning message withing enclosed dotted line is also shown. The email from modified DOM as displayed to receiver on device 106 (stage 3:step 3-3 of the method) appears as depicted in FIG. 7D. A logical flow for DOM modification is provided in FIG. 7E. While FIG. 7F indicates the modified email message as displayed to receiver with warning message inserted.

The phishing warnings in form of text message are displayed with change the font type face with kerning models as per a device form factor of a receiver device. For example tata.com is not confused with tafa.com based on the typeface. Furthermore, in an embodiment, the message to the receiver with one or more phishing warnings is an audio message if the receiver is registered as visually impaired, and in presented in a local language registered by the receiver if the receiver is a Basic Emergent User (BEU). The methodology to detect whether the user of the device is a BEU is as explained in applicants granted patent application number US10620977B2 titled "Method and system for providing security features in a smart phone." Furthermore, the message displayed to the receiver with the phishing warning comprises a validation functionality (as shown in the UI depicted in FIGS. 8A through 9B) enabling the user to trigger the 2FA from the receiver device (device 106). The user end validation provided allows user (receiver) to establish credibility of the email. The registry has contact [email, phone] of authorized person. In 2FA, the email is updated to say tap/click here for automated 2FA on tapping it using a 'validate' button. An auto callback is generated to the registered number - where in a special key say hash, pound is pressed - this validates the email as authentic on the authorized person side, an automated IVR is setup - which picks up a call and send a hash or pound key automatically - no human is required this email, if required, is auto-authenticated from the domain of the sender organization as is known, this system and number is not with intruder - hence 2FA will fail - so - the message will not be validated. This can be automated, or manual based on the budget of the receiver of the email who will accordingly initiate 2FA.

This user end additional 2FA validation feature is critical in peer to peer messaging, where the sender and the receiver components are on the same device. In such a network if a malicious user enters, a functionality is provided for the receiver to authenticate the received content. The receiver can use the 'validate' button option on the interface to initiate 2FA.

This functionality can also be used in client-server mode, for a situation wherein the user assess the need for a manual validation of the received content which may have missed the scrutiny of the server component containing the usable security module.

Further, as the system 102 (usable security module) captures data for users clicking malicious links or responding to the potentially malicious messages, this information is recorded to create the personalized threat profile for respective user falling prey to the phishing attack. At step stage 1-step1.3-1 [Table 2], stage 1-step1.3-2[Table 4] and stage 1-step1.3-3[Table 5], the one or more hardware processors are configured to create the personalized threat profile at the message exchange and communication server for one or more receivers of the message that are identified as victims if the one or more receivers have read and clicked on one or more messages identified as potentially malicious. The personalized threat profile tags each victim to one or more clusters, and wherein each cluster is associated with word-word phrase having high probability of occurrence (greater than a predefined threshold defined by a Subject Matter Expert) in the potentially malicious message read and clicked by the victim.

Generation of the personalized threat profile is explained with example using Table 2, Table 4 and Table 5. Table 2 indicates recording of emails that were identified as mass mailer communications and the sender domain was identified as 'rogue'. Table 4 indicates clustering of receivers into clusters. when ipsum@localhost clicks on the hyper link in the email and falls prey to the phishing message, the system records his action and classifies his into one or more of the clusters. Cluster classification is done using LLM, along with keyword mapping.

**Prompt:** From the $body of text identify the emotion that is being expressed and put them into 3 or more clusters of emotions and give label to those clusters.

For example ChatGPT^{™} response:
Cluster1: Concern
1. Worry
2. Distress

Cluster2: Emergency
1. Urgency

Cluster3: Financial Strain
1. Shortfall

**Table 4**

| receiverId | hash | message | cluster1 | cluster2 | clusterN |
|---|---|---|---|---|---|
| sanjay@tcs .com | afc683f51ffa99a3b3dc00546f543 10e4f20a65e | Hello money | money | | |
| della@tcs.c om | bfe6a3f51ffa9bc3b3dc00546f543 10e4f20a44f | Hello lottery | | lottery | |
| sujit@tcs.c om | 2ce5a3f51ffa9673b3dc00546f54 310e4f20a43d | Lost money | money | | lost |

**Table 5**

| receiverId | clusterVulnerability 1 | clusterVulnerability 2 | clusterVulnerability N |
|---|---|---|---|
| sanjay@tcs.co m | money | bank | |
| della@tcs.com | gift | lottery | |
| sujit@tcs.com | wallet | lost | |

For example, Sanjay 'receiver' is noted to be triggered by words in the message such as money or bank, hence during analysis of potentially malicious mail, when receiver is sanjay@ more focus is provided to mail analysis of receiver sanjay The system 102 is directed to focus via custom prompts engineered and given to the LLM on such emails for Sanjay.

The personalized threat profile is provided as a feedback during message modification for emphasized protection to the victims for a particular archetype of phishing attack linked with the cluster.

FIGS. 8A and 8B are example interactive User Interface (UIs) with phishing warnings displayed to a receiver on receiver's device by the system for different types of phishing attack via potentially malicious emails detected by the system, in accordance with some embodiments of the present disclosure.

FIGS. 9A and 9B are example interactive User Interface (UIs) with warnings displayed to a receiver on receiver's device by the system for different types of phishing attack via potentially malicious chat messages detected by the system, in accordance with some embodiments of the present disclosure.

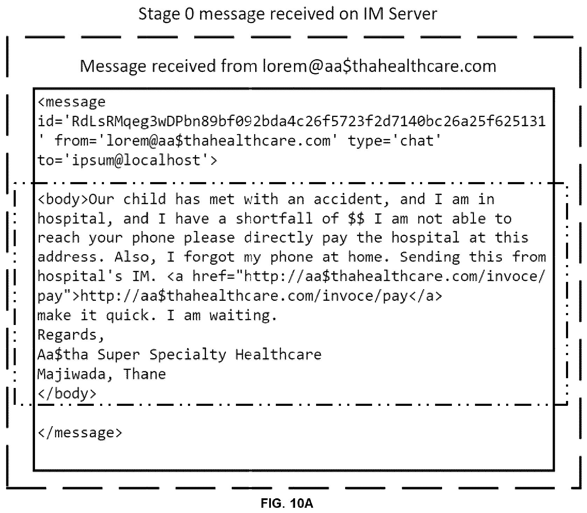

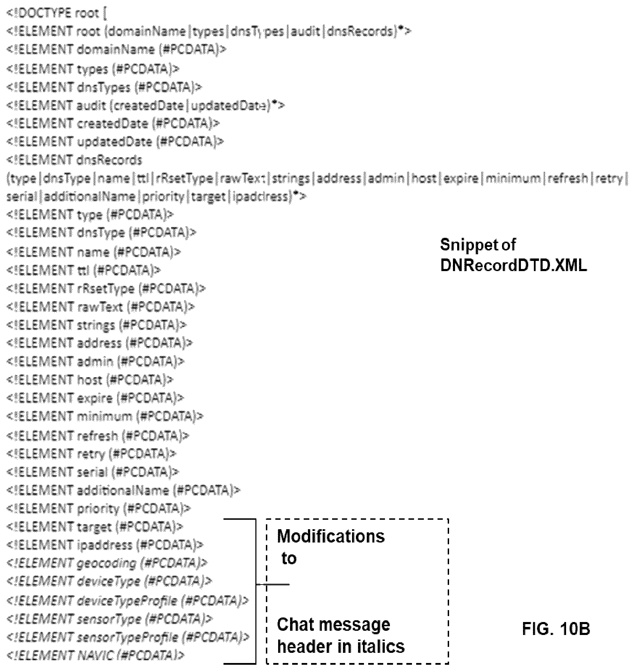

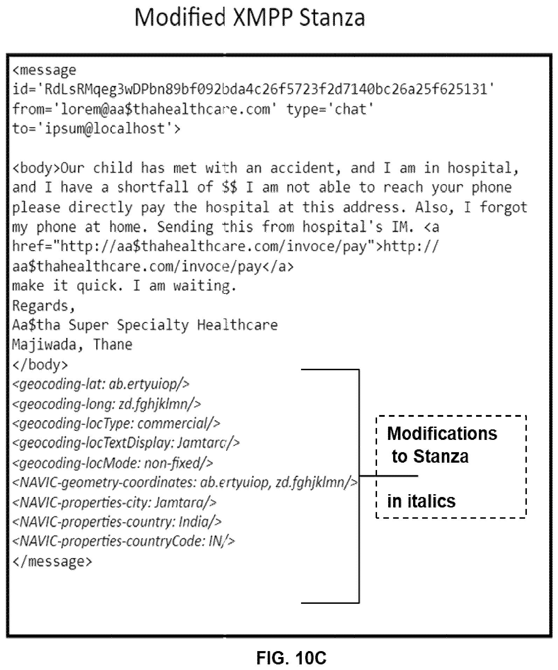

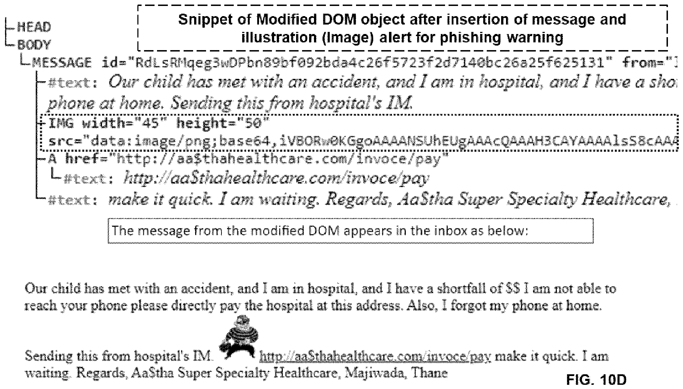

FIGS. 10A, 10B, 10C and 10D (collectively referred as FIG. 10) explain stage by stage processing flow by the system for a sample message (instant chat based on Extensible Messaging Presence Protocol-XMPP) received from the sender, wherein the system modifies the sample message to indicate phishing warning before sending it to a receiver, in accordance with some embodiments of the present disclosure. Depicted in the FIG. 10 only those snippets of the chat message processing which differ from email example depicted in of FIGS. 4A through 7F being processed, due specifics of XMPP.

The chat message over the XMPP protocol is received by an Instant Messaging (IM) server and recorded as in table 6 below.

**Table 6**

| time | event | from | to | id | message |
|---|---|---|---|---|---|
| Jan 04 11:0 0:10 c2s5 64b9 e449 bb0 | received | lorem@aa $thahealth care.com | ipsum @local host | RdLsRM qeg3wDP bn89bf09 2bda4c26 f5723f2d 7140bc26 a25f6251 31 | <html><body>Our child has met with an accident, and I am in hospital, and I have a shortfall of $$ I am not able to reach your phone please directly pay the hospital at this address. |
| | | | | | Also, I forgot my phone at home. Sending this from hospital's IM. <a href='http://aa$thaheal thca re.com/invoce/pay'>http://a a$thahealthcare.com/invoc e/pay</a> make it quick. I am waiting. |
| | | | | | Regards, Aa$tha Super Specialty Healthcare Majiwada, Thane</body></html> |

FIG. 10A depicts the message (chat message) received on IM server. As can be seen the XMPP comprises message type stanza used to share chat messages between two parties (sender and receiver). The original message is enclosed with a dotted box marking. It can be noted that like the SPF check in SMTP, IM server performs a Profile Framework (PF) Check, wherein similar to MXRecord Domain Name Server (DNS) Records maintains the legal records with domain name with registrar along with contact details. FIG. 10B depicts snippet of Snippet of DNRecordDTD.XML and modifications to Chat message header in italics. FIG. 10C depicts the modified XMPP stanza, highlighted with the dotted box. It can be understood that the process in which the chat message moving from sender to receiver is processed step wise similar to email message processing and repeated for brevity. The differences related to DNS record and stanza of XMPP are depicted in FIG. 10. FIG. 10D depicts the modified DOM to include image ( depicted with dotted box) indicating phishing warning).

Thus, the method and system disclosed herein provides intelligent automation of phishing message detection and prevention for all types of users such as BEUs (less literate, basic device users who are not well aware for using the devices and the applications with complete technological understanding), a visually impaired user or any user unable to self-detect a phishing attack via tricky messages by attacker (sender). The method provides the above solution for all IP messaging based protocol message types such as email, Instant Messaging, and the like.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with the scope of the invention being defined by the following claims.

## Claims

1. A processor implemented method (300) for providing usable security, the method comprising:
initiating (302), for each message among a plurality of messages received from one or more senders associated with sender ID and geo-sensor equipped sender devices, a Sender Profile Framework (SPF) check by checking records storing authorized domain names, via a plugin usable security module executed by one or more hardware processors of a message exchange and communication server, wherein the sender ID tagged as SPF-fail indicates that a domain name associated with the sender ID belongs to an unauthorized domain IP address, wherein a SPF stores a legal record of a plurality of domains and associated domain owner and organization details;
modifying (304), by the one or more hardware processors, the records with a set of custom headers comprising a plurality of parameters associated with a sender device profile, wherein the plurality of parameters comprising geocoding, device type, device type profile, sensor type, sensor type profile and accurate real-time positioning and timing services received from satellite agencies;
analyzing (306), by the one or more hardware processors, the one or more sender IDs tagged with SPF-fail in conjunction with one or more of the set of custom headers by performing one of:
(i) initiating a two factor authentication (2FA), if the message is associated with at least one of a mass mailer communication and an unauthorized domain IP address, the 2FA comprises:
communicating with a domain owner to confirm authorization of the unauthorized domain IP address, wherein the domain is classified as rogue if authorization is not confirmed, and identifying the sender associated with rogue domain as malicious and quarantining the message;
(ii) stripping body of the message, if the message does not belong to the mass mailer communication and does not have suspected domain name, and generating a checksum to derive presence of the mass mailer communication using checksum hit technique, wherein if the hits are beyond a threshold count the sender is identified as potentially malicious; and
(iii) if the domain IP address is detected to be mobile based on the geo code associated with the sender device present in the set of custom headers and captured in message header, then identify the sender as potentially malicious;
processing (308), by the one or more hardware processors, the message using prompt engineering, by a first LLM in conjunction with a phishy-domain-permutations database, if the sender of the message is identified as potentially malicious, wherein the processing comprises:
(i) analyzing the message body to provide reasons for sender indicated as malicious, wherein the reasons are in natural language and machine interpretable language;
(ii) iteratively processing the reasons to generate short reasons excluding technical jargons to be embedded in the body of the message;
(iii) generating an image using text-to-Image models, wherein the image is indicative of potentially malicious mail and sentiment in the mail; and
(iv) including a warning indicating IP address is mobile and not fixed; and
modifying (310), by the one or more hardware processors, the Document Object Module (DOM) instance for the message to incorporate the processed results of the LLM associated with phishing warnings, wherein the message is displayed to a receiver on a receiver device with one or more phishing warnings, wherein the phishing warnings are displayed at the DOM nodes based on positions indicated by the LLM, and wherein phishing warnings in form of text message are displayed with change the font type face with kerning models as per a device form factor of a receiver device.

2. The method as claimed in claim 1, wherein the method comprises creating a personalized threat profile at the message exchange and communication server for one or more receivers of the message that are identified as victims if the one or more receivers have read and clicked on one or more messages identified as potentially malicious, wherein the personalized threat profile tags each victim to one or more clusters, and wherein each cluster is associated with word-word phrase having probability of occurrence greater than a predefined threshold in the potentially malicious message read and clicked by the victim.

3. The method as claimed in claim 1, wherein the personalized threat profile is provided as a feedback during message modification for emphasized protection to the victims for a particular archetype of phishing attack linked with the cluster.

4. The method as claimed in claim 2, wherein the domain IP address is identified to be mobile if the geo codes of the sender device when mapped to a physical address and latitude longitude stored in as a time vector varies within a predefined time period, wherein if a geo field to record the geo codes in the set of custom headers are absent, an API is used to approximate the geo field for the geo codes.

5. The method as claimed in claim 1,
wherein communication with the domain owner is triggered, via a voice bot executing a Voice User Interface (VUI), based on information extracted from the legal record in the SPF,
wherein a legal notice is communicated to the domain owner via the VUIs and over an email, wherein the legal notice is obtained from a legal expert using voice to text technique, and
wherein, in the checksum hit technique, if the hits are beyond a threshold count the legal notice is obtained using text to voice technique and communicated to the domain owner using the VUI and over the email.

6. The method as claimed in claim 1, wherein the method comprises:
pre-generating via a second LLM permutations of valid non-existent or impersonate domain names in conjunction with each valid domain name and storing in the phishy-domain- permutations database; and
generate a textual and voice communication to the domain owner of each of the valid domain name requesting to register associated permutations of valid non-existent or impersonate domain names and rerouting to valid domain names, wherein the phishy-domain- permutations database is used during a reasoning analysis of LLM to check for presence of invalid domain in the sender domain name.

7. The method as claimed in claim 1,
wherein the message to the receiver with one or more phishing warnings is an audio message if the receiver is registered as visually impaired, and in presented in a local language registered by the receiver if the receiver is a Basic Emergent User (BEU),
wherein positions for the phishing warning indicated by the LLM are in accordance with Usability Principles of Communications that require proximity of warning based on Gestalt principles, and
wherein the message displayed to the receiver with the phishing warning comprises a validation functionality enabling the user to trigger the 2FA from the receiver device.

8. A system (100) for providing usable security, the system (100) comprising:
a memory (102) storing instructions;
one or more Input/Output (I/O) interfaces (106); and
one or more hardware processors (104) coupled to the memory (102) via the one or more I/O interfaces (106), wherein the one or more hardware processors (104) are configured by the instructions to:
initiate, for each message among a plurality of messages received from one or more senders associated with sender ID and geo-sensor equipped sender devices, a Sender Profile Framework (SPF) check by checking records storing authorized domain names, via a plugin usable security module executed by a message exchange and communication server, wherein the sender ID tagged as SPF-fail indicates that a domain name associated with the sender ID belongs to an unauthorized domain IP address, wherein a SPF stores legal record of a plurality of domains and associated domain owner and organization details;
modify the records with a set of custom headers comprising a plurality of parameters associated with a sender device profile, wherein the plurality of parameters comprising geocoding, device type, device type profile, sensor type, sensor type profile and accurate real-time positioning and timing services received from satellite agencies;
analyze, the one or more sender IDs tagged with SPF-fail in conjunction with one or more of the set of custom headers by performing one of:
(i) initiating a two factor authentication (2FA), if the message is associated with at least one of a mass mailer communication and an unauthorized domain IP address, the 2FA comprises:
communicating with a domain owner to confirm authorization of the unauthorized domain IP address, wherein the domain is classified as rogue if authorization is not confirmed, and identifying the sender associated with rogue domain as malicious and quarantining the message;
(ii) stripping body of the message, if the message does not belong to the mass mailer communication and does not have suspected domain name, and generating a checksum to derive presence of the mass mailer communication using checksum hit technique, wherein if the hits are beyond a threshold count the sender is identified as potentially malicious; and
(iii) if the domain IP address is detected to be mobile based on the geo code associated with the sender device present in the set of custom headers and captured in message header, then identify the sender as potentially malicious;
process the message using prompt engineering, by a first LLM in conjunction with a phishy-domain- permutations database, if the sender of the message is identified as potentially malicious, wherein the processing comprises:
(i) analyzing the message body to provide reasons for sender indicated as malicious, wherein the reasons are in natural language and machine interpretable language;
(ii) iteratively processing the reasons to generate short reasons excluding technical jargons to be embedded in the body of the message;
(iii) generating an image using text-to-Image models, wherein the image is indicative of potentially malicious mail and sentiment in the mail; and
(iv) including a warning indicating IP address is mobile and not fixed; and
modify the Document Object Module (DOM) instance for the message to incorporate the processed results of the LLM associated with phishing warnings, wherein the message is displayed to a receiver on a receiver device with one or more phishing warnings, wherein the phishing warnings are displayed at the DOM nodes based on positions indicated by the LLM, and wherein phishing warnings in form of text message are displayed with change the font type face with kerning models as per a device form factor of a receiver device.

9. The system as claimed in claim 8, wherein the one or more hardware processors are configured to create a personalized threat profile at the message exchange and communication server for one or more receivers of the message that are identified as victims if the one or more receivers have read and clicked on one or more messages identified as potentially malicious, wherein the personalized threat profile tags each victim to one or more clusters, and wherein each cluster is associated with word-word phrase having probability of occurrence greater than a predefined threshold in the potentially malicious message read and clicked by the victim.

10. The system as claimed in claim 9, wherein the personalized threat profile is provided as a feedback during message modification for emphasized protection to the victims for a particular archetype of phishing attack linked with the cluster.

11. The system as claimed in claim 8,
wherein communication with the domain owner is performed, via a voice bot executing a Voice User Interface (VUI), based on information extracted from the legal record in the SPF, and
wherein a legal notice is communicated to the domain owner via the VUIs and over an email, wherein the legal notice is obtained from a legal expert using voice to text technique, and
wherein, in the checksum hit technique, if the hits are beyond a threshold count the legal notice is obtained using text to voice technique and communicated to the domain owner using the VUI and over the email.

12. The system as claimed in claim 8, wherein the domain IP address is identified to be mobile if the geo codes of the sender device when mapped to a physical address and latitude longitude stored in as a time vector varies within a predefined time period, wherein if a geo field to record the geo codes in the set of custom headers are absent, an API is used to approximate the geo field for the geo codes.

13. The system as claimed in claim 8, wherein the one or more hardware processors are configured to:
pre-generate via a second LLM permutations of valid non-existent or impersonate domain names in conjunction with each valid domain name and store in the phishy-domain- permutations database; and
generate a textual and voice communication to the domain owner of each of the valid domain name requesting to register associated permutations of valid non-existent or impersonate domain names and reroute to valid domain names, wherein the phishy-domain- permutations database is used during the reasoning analysis of LLM to check for presence of invalid domain in the sender domain name.

14. The system as claimed in claim 8,
wherein the message to the receiver with one or more phishing warnings is an audio message if the receiver is registered as visually impaired, and in presented in a local language registered by the receiver if the receiver is a Basic Emergent User (BEU),
wherein positions for the phishing warning indicated by the LLM are in accordance with Usability Principles of Communications that require proximity of warning based on Gestalt principles, and
wherein the message displayed to the receiver with the phishing warning comprises a validation functionality enabling the user to trigger the 2FA from the receiver device.

15. One or more non-transitory machine-readable information storage mediums comprising one or more instructions which when executed by one or more hardware processors cause:
initiating, for each message among a plurality of messages received from one or more senders associated with sender ID and geo-sensor equipped sender devices, a Sender Profile Framework (SPF) check by checking records storing authorized domain names, via a plugin usable security module executed by the one or more hardware processors of a message exchange and communication server, wherein the sender ID tagged as SPF-fail indicates that a domain name associated with the sender ID belongs to an unauthorized domain IP address, wherein a SPF stores a legal record of a plurality of domains and associated domain owner and organization details;
modifying the records with a set of custom headers comprising a plurality of parameters associated with a sender device profile, wherein the plurality of parameters comprising geocoding, device type, device type profile, sensor type, sensor type profile and accurate real-time positioning and timing services received from satellite agencies;
analyzing the one or more sender IDs tagged with SPF-fail in conjunction with one or more of the set of custom headers by performing one of:
(i) initiating a two factor authentication (2FA), if the message is associated with at least one of a mass mailer communication and an unauthorized domain IP address, the 2FA comprises:
communicating with a domain owner to confirm authorization of the unauthorized domain IP address, wherein the domain is classified as rogue if authorization is not confirmed, and identifying the sender associated with rogue domain as malicious and quarantining the message;
(ii) stripping body of the message, if the message does not belong to the mass mailer communication and does not have suspected domain name, and generating a checksum to derive presence of the mass mailer communication using checksum hit technique, wherein if the hits are beyond a threshold count the sender is identified as potentially malicious; and
(iii) if the domain IP address is detected to be mobile based on the geo code associated with the sender device present in the set of custom headers and captured in message header, then identify the sender as potentially malicious;
processing the message using prompt engineering, by a first LLM in conjunction with a phishy-domain- permutations database, if the sender of the message is identified as potentially malicious, wherein the processing comprises:
(i) analyzing the message body to provide reasons for sender indicated as malicious, wherein the reasons are in natural language and machine interpretable language;
(ii) iteratively processing the reasons to generate short reasons excluding technical jargons to be embedded in the body of the message;
(iii) generating an image using text-to-Image models, wherein the image is indicative of potentially malicious mail and sentiment in the mail; and
(iv) including a warning indicating IP address is mobile and not fixed; and
modifying the Document Object Module (DOM) instance for the message to incorporate the processed results of the LLM associated with phishing warnings, wherein the message is displayed to a receiver on a receiver device with one or more phishing warnings, wherein the phishing warnings are displayed at the DOM nodes based on positions indicated by the LLM, and wherein phishing warnings in form of text message are displayed with change the font type face with kerning models as per a device form factor of a receiver device.

## Patentansprüche

1. Prozessorimplementiertes Verfahren (300) zum Bereitstellen von nutzbarer Sicherheit, wobei das Verfahren Folgendes umfasst:
Initiieren (302), für jede Nachricht aus einer Mehrzahl von Nachrichten, die von einem oder mehreren Sendern empfangen werden, die mit einer Sender-ID und mit einem Geosensor ausgestatteten Sendervorrichtungen assoziiert sind, einer Senderprofilrahmen-(SPF-) Prüfung durch Prüfen von Datensätzen, die autorisierte Domänennamen speichern, über ein Plugin-nutzbares Sicherheitsmodul, das von einem oder mehreren Hardwareprozessoren eines Nachrichtenaustausch- und Kommunikationsservers ausgeführt wird, wobei die als SPF-fail gekennzeichnete Sender-ID angibt, dass ein mit der Sender-ID assoziierter Domänenname zu einer nicht autorisierten Domänen-IP-Adresse gehört, wobei eine SPF einen legalen Datensatz einer Mehrzahl von Domänen und assoziierte Domänenbesitzer- und Organisationsdetails speichert;
Modifizieren (304), durch den einen oder die mehreren Hardwareprozessoren, der Datensätze mit einem Satz von benutzerdefinierten Headern, die eine Mehrzahl von Parametern umfassen, die mit einem Sendervorrichtungsprofil assoziiert sind, wobei die Mehrzahl von Parametern Geocodierung, Vorrichtungstyp, Vorrichtungstypprofil, Sensortyp, Sensortypprofil und genaue Echtzeit-Positionierungs- und Zeitsteuerungsdienste umfasst, die von Satellitenagenturen empfangen werden;
Analysieren (306), durch den einen oder die mehreren Hardwareprozessoren, der einen oder mehreren mit SPF-fail gekennzeichneten Sender-IDs in Verbindung mit einem oder mehreren aus dem Satz von benutzerdefinierten Headern durch Durchführen eines von Folgendem:
(i) Initiieren einer Zwei-Faktor-Authentifizierung (2FA), wenn die Nachricht mit mindestens einem von einer Massennachrichtenübermittlung und einer nicht autorisierten Domänen-IP-Adresse assoziiert ist, wobei die 2FA Folgendes umfasst:
Kommunizieren mit einem Domänenbesitzer, um die Autorisierung der nicht autorisierten Domänen-IP-Adresse zu bestätigen, wobei die Domäne als schmackhaft klassifiziert wird, wenn die Autorisierung nicht bestätigt wird, und Identifizieren des mit der schmackhaften Domäne assoziierten Senders als schädlich und unter Quarantäne stellen der Nachricht;
(ii) Entfernen des Hauptteils der Nachricht, wenn die Nachricht nicht zu der Massennachrichtenübermittlung gehört und keinen vermuteten Domänennamen aufweist, und Erzeugen einer Prüfsumme, um das Vorhandensein der Massennachrichtenübermittlung unter Verwendung einer Prüfsummentreffertechnik abzuleiten, wobei, wenn die Treffer über einer Schwellenanzahl liegen, der Sender als potenziell schädlich identifiziert wird; und
(iii) wenn detektiert wird, dass die Domänen-IP-Adresse mobil ist, basierend auf dem Geocode, der mit der Sendervorrichtung assoziiert ist, die in dem Satz von benutzerdefinierten Headern vorhanden und in dem Nachrichtenheader erfasst ist, dann Identifizieren des Senders als potenziell schädlich;
Verarbeiten (308), durch den einen oder die mehreren Hardwareprozessoren, der Nachricht unter Verwendung von Prompt Engineering durch eine erste LLM in Verbindung mit einer Phishy-Domänen-Permutations-Datenbank, wenn der Sender der Nachricht als potenziell schädlich identifiziert wird, wobei das Verarbeiten Folgendes umfasst:
(i) Analysieren des Nachrichtenhauptteils, um Gründe für den als schädlich angegebenen Sender bereitzustellen, wobei die Gründe in natürlicher Sprache und maschineninterpretierbarer Sprache vorliegen;
(ii) iteratives Verarbeiten der Gründe, um kurze Gründe zu erzeugen, die technische Jargone ausschließen, die in den Hauptteil der Nachricht einzubetten sind;
(iii) Erzeugen eines Bildes unter Verwendung von Text-zu-Bild-Modellen, wobei das Bild eine potenziell schädliche Mail und ein Gefühl in der Mail angibt; und
(iv) Einschließen einer Warnung, die angibt, dass die IP-Adresse mobil und nicht fest ist; und
Modifizieren (310), durch den einen oder die mehreren Hardwareprozessoren, der Dokumentobjektmodul(DOM)-Instanz für die Nachricht, um die verarbeiteten Ergebnisse der mit Phishing-Warnungen assoziierten LLM zu integrieren, wobei die Nachricht einem Empfänger auf einer Empfängervorrichtung mit einer oder mehreren Phishing-Warnungen angezeigt wird, wobei die Phishing-Warnungen an den DOM-Knoten basierend auf durch die LLM angegebenen Positionen angezeigt werden, und wobei Phishing-Warnungen in Form einer Textnachricht mit Änderung des Schrifttypgesichts mit entsprechenden Modellen gemäß einem Vorrichtungsformfaktor einer Empfängervorrichtung angezeigt werden.

2. Verfahren nach Anspruch 1, wobei das Verfahren das Erzeugen eines personalisierten Bedrohungsprofils an dem Nachrichtenaustausch- und Kommunikationsserver für einen oder mehrere Empfänger der Nachricht umfasst, die als Opfer identifiziert werden, wenn der eine oder die mehreren Empfänger eine oder mehrere als potenziell schädlich identifizierte Nachrichten gelesen und angeklickt haben, wobei das personalisierte Bedrohungsprofil jedes Opfer mit einem oder mehreren Clustern markiert, und wobei jedes Cluster mit einer Wort-Wort-Phrase assoziiert ist, die eine Auftrittswahrscheinlichkeit aufweist, die größer als ein vordefinierter Schwellenwert in der potenziell schädlichen Nachricht ist, die von dem Opfer gelesen und angeklickt wird.

3. Verfahren nach Anspruch 1, wobei das personalisierte Bedrohungsprofil als eine Rückmeldung während einer Nachrichtenmodifikation für einen hervorgehobenen Schutz für die Opfer für einen bestimmten Archetyp eines Phishing-Angriffs, der mit dem Cluster verknüpft ist, bereitgestellt wird.

4. Verfahren nach Anspruch 2, wobei identifiziert wird, dass die Domänen-IP-Adresse mobil ist, wenn die Geocodes der Sendervorrichtung, wenn sie auf eine physikalische Adresse und Breitenlänge abgebildet sind, die als ein Zeitvektor gespeichert sind, innerhalb eines vordefinierten Zeitraums variieren, wobei, wenn ein Geofeld zum Aufzeichnen der Geocodes in dem Satz von benutzerdefinierten Headern fehlt, eine API verwendet wird, um das Geofeld für die Geocodes anzunähern.

5. Verfahren nach Anspruch 1,
wobei die Kommunikation mit dem Domänenbesitzer über einen Sprachbot, der eine Sprachbenutzerschnittstelle (VUI) ausführt, basierend auf Informationen, die aus der Rechtsaufzeichnung in der SPF extrahiert werden, ausgelöst wird,
wobei eine Rechtsbenachrichtigung über die VUIS und über eine E-Mail an den Domänenbesitzer kommuniziert wird, wobei die Rechtsbenachrichtigung von einem Rechtsexperten unter Verwendung einer Sprache-zu-Text-Technik erhalten wird, und
wobei, in der Prüfsummentreffertechnik, wenn die Treffer über einer Schwellenanzahl liegen, die Rechtsbenachrichtigung unter Verwendung einer Text-zu-Sprache-Technik erhalten wird und unter Verwendung der VUI und über die E-Mail an den Domänenbesitzer kommuniziert wird.

6. Verfahren nach Anspruch 1, wobei das Verfahren Folgendes umfasst:
Vorerzeugen, über eine zweite LLM, von Permutationen von gültigen nicht existierenden oder sich im Besitz befindlichen Domänennamen in Verbindung mit jedem gültigen Domänennamen und Speichern in der Phishy-Domänen-Permutations-Datenbank; und
Erzeugen einer Text- und Sprachkommunikation an den Domänenbesitzer von jedem der gültigen Domänennamen, die anfordert, assoziierte Permutationen von gültigen nicht existierenden oder sich im Besitz befindlichen Domänennamen zu registrieren und zu gültigen Domänennamen umzuleiten, wobei die Phishy-Domänen-Permutations-Datenbank während einer Begründungsanalyse der LLM verwendet wird, um auf das Vorhandensein einer ungültigen Domäne in dem Senderdomänennamen zu prüfen.

7. Verfahren nach Anspruch 1,
wobei die Nachricht an den Empfänger mit einer oder mehreren Phishing-Warnungen eine Audionachricht ist, wenn der Empfänger als sehbehindert registriert ist, und in einer von dem Empfänger registrierten lokalen Sprache präsentiert wird, wenn der Empfänger ein Basic Emergent User (BEU) ist,
wobei Positionen für die Phishing-Warnung, die von der LLM angegeben wird, in Übereinstimmung mit Usability Principles of Communications sind, die eine Nähe einer Warnung basierend auf Gestalt-Prinzipien erfordern, und
wobei die Nachricht, die dem Empfänger mit der Phishing-Warnung angezeigt wird, eine Validierungsfunktionalität umfasst, die es dem Benutzer ermöglicht, die 2FA von der Empfängervorrichtung auszulösen.

8. System (100) zum Bereitstellen von nutzbarer Sicherheit, wobei das System (100) Folgendes umfasst:
einen Speicher (102), der Anweisungen speichert;
eine oder mehrere Eingabe/Ausgabe(E/A)-Schnittstellen (106); und
einen oder mehrere Hardwareprozessoren (104), die über die eine oder die mehreren E/A-Schnittstellen (106) mit dem Speicher (102) gekoppelt sind, wobei der eine oder die mehreren Hardwareprozessoren (104) durch die Anweisungen konfiguriert sind zum:
Initiieren, für jede Nachricht aus einer Mehrzahl von Nachrichten, die von einem oder mehreren Sendern empfangen werden, die mit einer Sender-ID und mit einem Geosensor ausgestatteten Sendervorrichtungen assoziiert sind, einer Senderprofilrahmen-(SPF-) Prüfung durch Prüfen von Datensätzen, die autorisierte Domänennamen speichern, über ein Plugin-nutzbares Sicherheitsmodul, das von einem Nachrichtenaustausch- und Kommunikationsserver ausgeführt wird, wobei die als SPF-fail gekennzeichnete Sender-ID angibt, dass ein mit der Sender-ID assoziierter Domänenname zu einer nicht autorisierten Domänen-IP-Adresse gehört, wobei eine SPF einen legalen Datensatz einer Mehrzahl von Domänen und assoziierte Domänenbesitzer- und Organisationsdetails speichert;
Modifizieren der Datensätze mit einem Satz von benutzerdefinierten Headern, die eine Mehrzahl von Parametern umfassen, die mit einem Sendervorrichtungsprofil assoziiert sind, wobei die Mehrzahl von Parametern Geocodierung, Vorrichtungstyp, Vorrichtungstypprofil, Sensortyp, Sensortypprofil und genaue Echtzeit-Positionierungs- und Zeitsteuerungsdienste umfasst, die von Satellitenagenturen empfangen werden;
Analysieren der einen oder mehreren mit SPF-fail gekennzeichneten Sender-IDs in Verbindung mit einem oder mehreren aus dem Satz von benutzerdefinierten Headern durch Durchführen eines von Folgendem:
(i) Initiieren einer Zwei-Faktor-Authentifizierung (2FA), wenn die Nachricht mit mindestens einem von einer Massennachrichtenübermittlung und einer nicht autorisierten Domänen-IP-Adresse assoziiert ist, wobei die 2FA Folgendes umfasst:
Kommunizieren mit einem Domänenbesitzer, um die Autorisierung der nicht autorisierten Domänen-IP-Adresse zu bestätigen, wobei die Domäne als schmackhaft klassifiziert wird, wenn die Autorisierung nicht bestätigt wird, und Identifizieren des mit der schmackhaften Domäne assoziierten Senders als schädlich und unter Quarantäne stellen der Nachricht;
(ii) Entfernen des Hauptteils der Nachricht, wenn die Nachricht nicht zu der Massennachrichtenübermittlung gehört und keinen vermuteten Domänennamen aufweist, und Erzeugen einer Prüfsumme, um das Vorhandensein der Massennachrichtenübermittlung unter Verwendung einer Prüfsummentreffertechnik abzuleiten, wobei, wenn die Treffer über einer Schwellenanzahl liegen, der Sender als potenziell schädlich identifiziert wird; und
(iii) wenn detektiert wird, dass die Domänen-IP-Adresse mobil ist, basierend auf dem Geocode, der mit der Sendervorrichtung assoziiert ist, die in dem Satz von benutzerdefinierten Headern vorhanden und in dem Nachrichtenheader erfasst ist, dann Identifizieren des Senders als potenziell schädlich;
Verarbeiten der Nachricht unter Verwendung von Prompt Engineering durch eine erste LLM in Verbindung mit einer Phishy-Domänen-Permutations-Datenbank, wenn der Sender der Nachricht als potenziell schädlich identifiziert wird, wobei das Verarbeiten Folgendes umfasst:
(i) Analysieren des Nachrichtenhauptteils, um Gründe für den als schädlich angegebenen Sender bereitzustellen, wobei die Gründe in natürlicher Sprache und maschineninterpretierbarer Sprache vorliegen;
(ii) iteratives Verarbeiten der Gründe, um kurze Gründe zu erzeugen, die technische Jargone ausschließen, die in den Hauptteil der Nachricht einzubetten sind;
(iii) Erzeugen eines Bildes unter Verwendung von Text-zu-Bild-Modellen, wobei das Bild eine potenziell schädliche Mail und ein Gefühl in der Mail angibt; und
(iv) Einschließen einer Warnung, die angibt, dass die IP-Adresse mobil und nicht fest ist; und
Modifizieren der Dokumentobjektmodul(DOM)-Instanz für die Nachricht, um die verarbeiteten Ergebnisse der mit Phishing-Warnungen assoziierten LLM zu integrieren, wobei die Nachricht einem Empfänger auf einer Empfängervorrichtung mit einer oder mehreren Phishing-Warnungen angezeigt wird, wobei die Phishing-Warnungen an den DOM-Knoten basierend auf durch die LLM angegebenen Positionen angezeigt werden, und wobei Phishing-Warnungen in Form einer Textnachricht mit Änderung des Schrifttypgesichts mit entsprechenden Modellen gemäß einem Vorrichtungsformfaktor einer Empfängervorrichtung angezeigt werden.

9. System nach Anspruch 8, wobei der eine oder die mehreren Hardwareprozessoren konfiguriert sind, um ein personalisiertes Bedrohungsprofil an dem Nachrichtenaustausch- und Kommunikationsserver für einen oder mehrere Empfänger der Nachricht zu erzeugen, die als Opfer identifiziert werden, wenn der eine oder die mehreren Empfänger eine oder mehrere als potenziell schädlich identifizierte Nachrichten gelesen und angeklickt haben, wobei das personalisierte Bedrohungsprofil jedes Opfer mit einem oder mehreren Clustern markiert, und wobei jedes Cluster mit einer Wort-Wort-Phrase assoziiert ist, die eine Auftrittswahrscheinlichkeit aufweist, die größer als ein vordefinierter Schwellenwert in der potenziell schädlichen Nachricht ist, die von dem Opfer gelesen und angeklickt wird.

10. System nach Anspruch 9, wobei das personalisierte Bedrohungsprofil als eine Rückmeldung während einer Nachrichtenmodifikation für einen hervorgehobenen Schutz für die Opfer für einen bestimmten Archetyp eines Phishing-Angriffs, der mit dem Cluster verknüpft ist, bereitgestellt wird.

11. System nach Anspruch 8,
wobei die Kommunikation mit dem Domänenbesitzer über einen Sprachbot, der eine Sprachbenutzerschnittstelle (VUI) ausführt, basierend auf Informationen, die aus der Rechtsaufzeichnung in der SPF extrahiert werden, ausgeführt wird, und
wobei eine Rechtsbenachrichtigung über die VUIS und über eine E-Mail an den Domänenbesitzer kommuniziert wird, wobei die Rechtsbenachrichtigung von einem Rechtsexperten unter Verwendung einer Sprache-zu-Text-Technik erhalten wird, und
wobei, in der Prüfsummentreffertechnik, wenn die Treffer über einer Schwellenanzahl liegen, die Rechtsbenachrichtigung unter Verwendung einer Text-zu-Sprache-Technik erhalten wird und unter Verwendung der VUI und über die E-Mail an den Domänenbesitzer kommuniziert wird.

12. System nach Anspruch 8, wobei identifiziert wird, dass die Domänen-IP-Adresse mobil ist, wenn die Geocodes der Sendervorrichtung, wenn sie auf eine physikalische Adresse und Breitenlänge abgebildet sind, die als ein Zeitvektor gespeichert sind, innerhalb eines vordefinierten Zeitraums variieren, wobei, wenn ein Geofeld zum Aufzeichnen der Geocodes in dem Satz von benutzerdefinierten Headern fehlt, eine API verwendet wird, um das Geofeld für die Geocodes anzunähern.

13. System nach Anspruch 8, wobei der eine oder die mehreren Hardwareprozessoren konfiguriert sind zum:
Vorerzeugen, über eine zweite LLM, von Permutationen von gültigen nicht existierenden oder sich im Besitz befindlichen Domänennamen in Verbindung mit jedem gültigen Domänennamen und Speichern in der Phishy-Domänen-Permutations-Datenbank; und
Erzeugen einer Text- und Sprachkommunikation an den Domänenbesitzer von jedem der gültigen Domänennamen, die anfordert, assoziierte Permutationen von gültigen nicht existierenden oder sich im Besitz befindlichen Domänennamen zu registrieren und zu gültigen Domänennamen umzuleiten, wobei die Phishy-Domänen-Permutations-Datenbank während der Begründungsanalyse der LLM verwendet wird, um auf das Vorhandensein einer ungültigen Domäne in dem Senderdomänennamen zu prüfen.

14. System nach Anspruch 8,
wobei die Nachricht an den Empfänger mit einer oder mehreren Phishing-Warnungen eine Audionachricht ist, wenn der Empfänger als sehbehindert registriert ist, und in einer von dem Empfänger registrierten lokalen Sprache präsentiert wird, wenn der Empfänger ein Basic Emergent User (BEU) ist,
wobei Positionen für die Phishing-Warnung, die von der LLM angegeben wird, in Übereinstimmung mit Usability Principles of Communications sind, die eine Nähe einer Warnung basierend auf Gestalt-Prinzipien erfordern, und
wobei die Nachricht, die dem Empfänger mit der Phishing-Warnung angezeigt wird, eine Validierungsfunktionalität umfasst, die es dem Benutzer ermöglicht, die 2FA von der Empfängervorrichtung auszulösen.

15. Ein oder mehrere nichtflüchtige maschinenlesbare Informationsspeichermedien, die eine oder mehrere Anweisungen umfassen, die, wenn sie von einem oder mehreren Hardwareprozessoren ausgeführt werden, Folgendes bewirken:
Initiieren, für jede Nachricht aus einer Mehrzahl von Nachrichten, die von einem oder mehreren Sendern empfangen werden, die mit einer Sender-ID und mit einem Geosensor ausgestatteten Sendervorrichtungen assoziiert sind, einer Senderprofilrahmen-(SPF-) Prüfung durch Prüfen von Datensätzen, die autorisierte Domänennamen speichern, über ein Plugin-nutzbares Sicherheitsmodul, das von dem einen oder den mehreren Hardwareprozessoren eines Nachrichtenaustausch- und Kommunikationsservers ausgeführt wird, wobei die als SPF-fail gekennzeichnete Sender-ID angibt, dass ein mit der Sender-ID assoziierter Domänenname zu einer nicht autorisierten Domänen-IP-Adresse gehört, wobei eine SPF einen legalen Datensatz einer Mehrzahl von Domänen und assoziierte Domänenbesitzer- und Organisationsdetails speichert;
Modifizieren der Datensätze mit einem Satz von benutzerdefinierten Headern, die eine Mehrzahl von Parametern umfassen, die mit einem Sendervorrichtungsprofil assoziiert sind, wobei die Mehrzahl von Parametern Geocodierung, Vorrichtungstyp, Vorrichtungstypprofil, Sensortyp, Sensortypprofil und genaue Echtzeit-Positionierungs- und Zeitsteuerungsdienste umfasst, die von Satellitenagenturen empfangen werden;
Analysieren der einen oder mehreren mit SPF-fail gekennzeichneten Sender-IDs in Verbindung mit einem oder mehreren aus dem Satz von benutzerdefinierten Headern durch Durchführen eines von Folgendem:
(i) Initiieren einer Zwei-Faktor-Authentifizierung (2FA), wenn die Nachricht mit mindestens einem von einer Massennachrichtenübermittlung und einer nicht autorisierten Domänen-IP-Adresse assoziiert ist, wobei die 2FA Folgendes umfasst:
Kommunizieren mit einem Domänenbesitzer, um die Autorisierung der nicht autorisierten Domänen-IP-Adresse zu bestätigen, wobei die Domäne als schmackhaft klassifiziert wird, wenn die Autorisierung nicht bestätigt wird, und Identifizieren des mit der schmackhaften Domäne assoziierten Senders als schädlich und unter Quarantäne stellen der Nachricht;
(ii) Entfernen des Hauptteils der Nachricht, wenn die Nachricht nicht zu der Massennachrichtenübermittlung gehört und keinen vermuteten Domänennamen aufweist, und Erzeugen einer Prüfsumme, um das Vorhandensein der Massennachrichtenübermittlung unter Verwendung einer Prüfsummentreffertechnik abzuleiten, wobei, wenn die Treffer über einer Schwellenanzahl liegen, der Sender als potenziell schädlich identifiziert wird; und
(iii) wenn detektiert wird, dass die Domänen-IP-Adresse mobil ist, basierend auf dem Geocode, der mit der Sendervorrichtung assoziiert ist, die in dem Satz von benutzerdefinierten Headern vorhanden und in dem Nachrichtenheader erfasst ist, dann Identifizieren des Senders als potenziell schädlich;
Verarbeiten der Nachricht unter Verwendung von Prompt Engineering durch eine erste LLM in Verbindung mit einer Phishy-Domänen-Permutations-Datenbank, wenn der Sender der Nachricht als potenziell schädlich identifiziert wird, wobei das Verarbeiten Folgendes umfasst:
(i) Analysieren des Nachrichtenhauptteils, um Gründe für den als schädlich angegebenen Sender bereitzustellen, wobei die Gründe in natürlicher Sprache und maschineninterpretierbarer Sprache vorliegen;
(ii) iteratives Verarbeiten der Gründe, um kurze Gründe zu erzeugen, die technische Jargone ausschließen, die in den Hauptteil der Nachricht einzubetten sind;
(iii) Erzeugen eines Bildes unter Verwendung von Text-zu-Bild-Modellen, wobei das Bild eine potenziell schädliche Mail und ein Gefühl in der Mail angibt; und
(iv) Einschließen einer Warnung, die angibt, dass die IP-Adresse mobil und nicht fest ist; und
Modifizieren der Dokumentobjektmodul(DOM)-Instanz für die Nachricht, um die verarbeiteten Ergebnisse der mit Phishing-Warnungen assoziierten LLM zu integrieren, wobei die Nachricht einem Empfänger auf einer Empfängervorrichtung mit einer oder mehreren Phishing-Warnungen angezeigt wird, wobei die Phishing-Warnungen an den DOM-Knoten basierend auf durch die LLM angegebenen Positionen angezeigt werden, und wobei Phishing-Warnungen in Form einer Textnachricht mit Änderung des Schrifttypgesichts mit entsprechenden Modellen gemäß einem Vorrichtungsformfaktor einer Empfängervorrichtung angezeigt werden.

## Revendications

1. Procédé mis en œuvre par processeur (300) pour fournir une sécurité utilisable, le procédé comprenant :
l'initiation (302), pour chaque message parmi une pluralité de messages reçus d'un ou plusieurs expéditeurs associés à un ID d'expéditeur et des dispositifs expéditeurs équipés de géocapteurs, d'une vérification d'infrastructure de profil d'expéditeur (SPF) en vérifiant des enregistrements stockant des noms de domaine autorisés, via un module de sécurité utilisable de module d'extension exécuté par un ou plusieurs processeurs matériels d'un serveur d'échange et de communication de messages, dans lequel l'ID d'expéditeur étiqueté comme SPF-fail indique qu'un nom de domaine associé à l'ID d'expéditeur appartient à une adresse IP de domaine non autorisée, dans lequel une SPF stocke un enregistrement légal d'une pluralité de domaines et des détails de propriétaire et d'organisation de domaine associés ;
la modification (304), par les un ou plusieurs processeurs matériels, des enregistrements avec un ensemble d'en-têtes personnalisés comprenant une pluralité de paramètres associés à un profil de dispositif expéditeur, dans lequel la pluralité de paramètres comprend un géocodage, un type de dispositif, un profil de type de dispositif, un type de capteur, un profil de type de capteur et des services de positionnement et de synchronisation en temps réel précis reçus d'agences de satellites ;
l'analyse (306), par les un ou plusieurs processeurs matériels, des un ou plusieurs ID d'expéditeur étiquetés avec SPF-fail conjointement avec un ou plusieurs de l'ensemble d'en-têtes personnalisés en effectuant l'une parmi :
(i) l'initiation d'une authentification à deux facteurs (2FA), si le message est associé à au moins l'une parmi une communication de courrier de masse et une adresse IP de domaine non autorisée, la 2FA comprenant :
la communication avec un propriétaire de domaine pour confirmer l'autorisation de l'adresse IP de domaine non autorisée, dans lequel le domaine est classé comme indésirable si l'autorisation n'est pas confirmée, et l'identification de l'expéditeur associé au domaine indésirable comme malveillant et la mise en quarantaine du message ;
(ii) le dépouillement du corps du message, si le message n'appartient pas à la communication de courrier de masse et n'a pas de nom de domaine suspecté, et la génération d'une somme de contrôle pour déduire la présence de la communication de courrier de masse en utilisant une technique de réussite de somme de contrôle, dans lequel si les réussites sont au-delà d'un décompte de seuil, l'expéditeur est identifié comme potentiellement malveillant ; et
(iii) si l'adresse IP de domaine est détectée comme étant mobile sur la base du géocode associé au dispositif expéditeur présent dans l'ensemble d'en-têtes personnalisés et capturé dans l'en-tête de message, identifier l'expéditeur comme potentiellement malveillant ;
le traitement (308), par les un ou plusieurs processeurs matériels, du message en utilisant une ingénierie rapide, par un premier LLM conjointement avec une base de données de permutations de domaine d'hameçonnage, si l'expéditeur du message est identifié comme potentiellement malveillant, dans lequel le traitement comprend :
(i) l'analyse du corps de message pour fournir des raisons pour l'expéditeur indiqué comme malveillant, dans lequel les raisons sont en langage naturel et en langage interprétable par machine ;
(ii) le traitement itératif des raisons pour générer des raisons courtes à l'exclusion des jargons techniques à incorporer dans le corps du message ;
(iii) la génération d'une image en utilisant des modèles de texte à image, dans lequel l'image est indicative d'un courrier potentiellement malveillant et d'un sentiment dans le courrier ; et
(iv) l'inclusion d'un avertissement indiquant que l'adresse IP est mobile et non fixe ; et
la modification (310), par les un ou plusieurs processeurs matériels, de l'instance de module d'objet de document (DOM) pour le message pour incorporer les résultats traités du LLM associés à des avertissements de hameçonnage, dans lequel le message est affiché à un récepteur sur un dispositif récepteur avec un ou plusieurs avertissements de hameçonnage, dans lequel les avertissements de hameçonnage sont affichés au niveau des nœuds DOM sur la base de positions indiquées par le LLM, et dans lequel les avertissements de hameçonnage sous la forme d'un message texte sont affichés avec un changement de la face de type de police avec des modèles de police selon un facteur de forme de dispositif d'un dispositif récepteur.

2. Procédé selon la revendication 1, dans lequel le procédé comprend la création d'un profil de menace personnalisé au niveau du serveur d'échange et de communication de message pour un ou plusieurs récepteurs du message qui sont identifiés comme victimes si les un ou plusieurs récepteurs ont lu et cliqué sur un ou plusieurs messages identifiés comme potentiellement malveillants, dans lequel le profil de menace personnalisé marque chaque victime à un ou plusieurs groupes, et dans lequel chaque groupe est associé à une phrase de mot-mot ayant une probabilité d'occurrence supérieure à un seuil prédéfini dans le message potentiellement malveillant lu et cliqué par la victime.

3. Procédé selon la revendication 1, dans lequel le profil de menace personnalisé est fourni en tant que rétroaction pendant une modification de message pour une protection accentuée aux victimes pour un archétype particulier d'attaque de hameçonnage lié au groupe.

4. Procédé selon la revendication 2, dans lequel l'adresse IP de domaine est identifiée comme étant mobile si les géocodes du dispositif expéditeur lorsqu'ils sont mis en correspondance avec une adresse physique et une longitude de latitude stockée en tant que vecteur de temps varient dans une période de temps prédéfinie, dans lequel si un champ géographique pour enregistrer les géocodes dans l'ensemble d'en-têtes personnalisés est absent, une API est utilisée pour approximer le champ géographique pour les géocodes.

5. Procédé selon la revendication 1,
dans lequel une communication avec le propriétaire de domaine est déclenchée, via un bot vocal exécutant une interface utilisateur vocale (VUI), sur la base d'informations extraites de l'enregistrement légal dans la SPF,
dans lequel un avis légal est communiqué au propriétaire de domaine via les VUI et sur un courriel, dans lequel l'avis légal est obtenu à partir d'un expert juridique en utilisant une technique de voix à texte, et
dans lequel, dans la technique de réussite de somme de contrôle, si les réussites sont au-delà d'un décompte de seuil, l'avis légal est obtenu en utilisant une technique de texte à voix et communiqué au propriétaire de domaine en utilisant la VUI et sur le courriel.

6. Procédé selon la revendication 1, dans lequel le procédé comprend :
la pré-génération via un second LLM de permutations de noms de domaine valides non existants ou d'identité conjointement avec chaque nom de domaine valide et le stockage dans la base de données de permutations de domaine d'hameçonnage ; et
la génération d'une communication textuelle et vocale au propriétaire de domaine de chacun des noms de domaine valides demandant d'enregistrer des permutations associées de noms de domaine valides non existants ou d'identité et le réacheminement vers des noms de domaine valides, dans lequel la base de données de permutations de domaine d'hameçonnage est utilisée pendant une analyse de raisonnement de LLM pour vérifier la présence d'un domaine non valide dans le nom de domaine d'expéditeur.

7. Procédé selon la revendication 1,
dans lequel le message au récepteur avec un ou plusieurs avertissements de hameçonnage est un message audio si le récepteur est enregistré comme étant déficient visuellement, et est présenté dans une langue locale enregistrée par le récepteur si le récepteur est un utilisateur émergent de base (BEU),
dans lequel des positions pour l'avertissement de hameçonnage indiquées par le LLM sont conformes à des principes d'utilisabilité de communications qui nécessitent une proximité d'avertissement sur la base de principes de Gestalt, et
dans lequel le message affiché au récepteur avec l'avertissement de hameçonnage comprend une fonctionnalité de validation permettant à l'utilisateur de déclencher le 2FA à partir du dispositif récepteur.

8. Système (100) pour fournir une sécurité utilisable, le système (100) comprenant :
une mémoire (102) stockant des instructions ;
une ou plusieurs interfaces d'entrée/sortie (E/S) (106) ; et
un ou plusieurs processeurs matériels (104) couplés à la mémoire (102) via les une ou plusieurs interfaces E/S (106), dans lequel les un ou plusieurs processeurs matériels (104) sont configurés par les instructions pour :
initier, pour chaque message parmi une pluralité de messages reçus d'un ou plusieurs expéditeurs associés à un ID d'expéditeur et des dispositifs expéditeurs équipés de géocapteurs, une vérification d'infrastructure de profil d'expéditeur (SPF) en vérifiant des enregistrements stockant des noms de domaine autorisés, via un module de sécurité utilisable de module d'extension exécuté par un serveur d'échange et de communication de messages, dans lequel l'ID d'expéditeur étiqueté comme SPF-fail indique qu'un nom de domaine associé à l'ID d'expéditeur appartient à une adresse IP de domaine non autorisée, dans lequel une SPF stocke un enregistrement légal d'une pluralité de domaines et des détails de propriétaire et d'organisation de domaine associés ;
modifier les enregistrements avec un ensemble d'en-têtes personnalisés comprenant une pluralité de paramètres associés à un profil de dispositif expéditeur, dans lequel la pluralité de paramètres comprend un géocodage, un type de dispositif, un profil de type de dispositif, un type de capteur, un profil de type de capteur et des services de positionnement et de synchronisation en temps réel précis reçus d'agences de satellites ;
analyser, les un ou plusieurs ID d'expéditeur étiquetés avec SPF-fail conjointement avec un ou plusieurs de l'ensemble d'en-têtes personnalisés en effectuant l'une parmi :
(i) l'initiation d'une authentification à deux facteurs (2FA), si le message est associé à au moins l'une parmi une communication de courrier de masse et une adresse IP de domaine non autorisée, la 2FA comprenant :
la communication avec un propriétaire de domaine pour confirmer l'autorisation de l'adresse IP de domaine non autorisée, dans lequel le domaine est classé comme indésirable si l'autorisation n'est pas confirmée, et l'identification de l'expéditeur associé au domaine indésirable comme malveillant et la mise en quarantaine du message ;
(ii) le dépouillement du corps du message, si le message n'appartient pas à la communication de courrier de masse et n'a pas de nom de domaine suspecté, et la génération d'une somme de contrôle pour déduire la présence de la communication de courrier de masse en utilisant une technique de réussite de somme de contrôle, dans lequel si les réussites sont au-delà d'un décompte de seuil, l'expéditeur est identifié comme potentiellement malveillant ; et
(iii) si l'adresse IP de domaine est détectée comme étant mobile sur la base du géocode associé au dispositif expéditeur présent dans l'ensemble d'en-têtes personnalisés et capturé dans l'en-tête de message, identifier l'expéditeur comme potentiellement malveillant ;
le traitement du message en utilisant une ingénierie rapide, par un premier LLM conjointement avec une base de données de permutations de domaine d'hameçonnage, si l'expéditeur du message est identifié comme potentiellement malveillant, dans lequel le traitement comprend :
(i) l'analyse du corps de message pour fournir des raisons pour l'expéditeur indiqué comme malveillant, dans lequel les raisons sont en langage naturel et en langage interprétable par machine ;
(ii) le traitement itératif des raisons pour générer des raisons courtes à l'exclusion des jargons techniques à incorporer dans le corps du message ;
(iii) la génération d'une image en utilisant des modèles de texte à image, dans lequel l'image est indicative d'un courrier potentiellement malveillant et d'un sentiment dans le courrier ; et
(iv) l'inclusion d'un avertissement indiquant que l'adresse IP est mobile et non fixe ; et
la modification de l'instance de module d'objet de document (DOM) pour le message pour incorporer les résultats traités du LLM associés à des avertissements de hameçonnage, dans lequel le message est affiché à un récepteur sur un dispositif récepteur avec un ou plusieurs avertissements de hameçonnage, dans lequel les avertissements de hameçonnage sont affichés au niveau des nœuds DOM sur la base de positions indiquées par le LLM, et dans lequel les avertissements de hameçonnage sous la forme d'un message texte sont affichés avec un changement de la face de type de police avec des modèles de police selon un facteur de forme de dispositif d'un dispositif récepteur.

9. Système selon la revendication 8, dans lequel les un ou plusieurs processeurs matériels sont configurés pour créer un profil de menace personnalisé au niveau du serveur d'échange et de communication de message pour un ou plusieurs récepteurs du message qui sont identifiés comme victimes si les un ou plusieurs récepteurs ont lu et cliqué sur un ou plusieurs messages identifiés comme potentiellement malveillants, dans lequel le profil de menace personnalisé marque chaque victime à un ou plusieurs groupes, et dans lequel chaque groupe est associé à une phrase de mot-mot ayant une probabilité d'occurrence supérieure à un seuil prédéfini dans le message potentiellement malveillant lu et cliqué par la victime.

10. Système selon la revendication 9, dans lequel le profil de menace personnalisé est fourni en tant que rétroaction pendant une modification de message pour une protection accentuée aux victimes pour un archétype particulier d'attaque de hameçonnage lié au groupe.

11. Système selon la revendication 8,
dans lequel une communication avec le propriétaire de domaine est effectuée, via un bot vocal exécutant une interface utilisateur vocale (VUI), sur la base d'informations extraites de l'enregistrement légal dans la SPF, et
dans lequel un avis légal est communiqué au propriétaire de domaine via les VUI et sur un courriel, dans lequel l'avis légal est obtenu à partir d'un expert juridique en utilisant une technique de voix à texte, et
dans lequel, dans la technique de réussite de somme de contrôle, si les réussites sont au-delà d'un décompte de seuil, l'avis légal est obtenu en utilisant une technique de texte à voix et communiqué au propriétaire de domaine en utilisant la VUI et sur le courriel.

12. Système selon la revendication 8, dans lequel l'adresse IP de domaine est identifiée comme étant mobile si les géocodes du dispositif expéditeur lorsqu'ils sont mis en correspondance avec une adresse physique et une longitude de latitude stockée en tant que vecteur de temps varient dans une période de temps prédéfinie, dans lequel si un champ géographique pour enregistrer les géocodes dans l'ensemble d'en-têtes personnalisés est absent, une API est utilisée pour approximer le champ géographique pour les géocodes.

13. Système selon la revendication 8, dans lequel les un ou plusieurs processeurs matériels sont configurés pour :
pré-générer via un second LLM des permutations de noms de domaine valides non existants ou d'identité conjointement avec chaque nom de domaine valide et stocker dans la base de données de permutations de domaine d'hameçonnage ; et
générer une communication textuelle et vocale au propriétaire de domaine de chacun des noms de domaine valides demandant d'enregistrer des permutations associées de noms de domaine valides non existants ou d'identité et le réacheminement vers des noms de domaine valides, dans lequel la base de données de permutations de domaine d'hameçonnage est utilisée pendant l'analyse de raisonnement de LLM pour vérifier la présence d'un domaine non valide dans le nom de domaine d'expéditeur.

14. Système selon la revendication 8,
dans lequel le message au récepteur avec un ou plusieurs avertissements de hameçonnage est un message audio si le récepteur est enregistré comme étant déficient visuellement, et est présenté dans une langue locale enregistrée par le récepteur si le récepteur est un utilisateur émergent de base (BEU),
dans lequel des positions pour l'avertissement de hameçonnage indiquées par le LLM sont conformes à des principes d'utilisabilité de communications qui nécessitent une proximité d'avertissement sur la base de principes de Gestalt, et
dans lequel le message affiché au récepteur avec l'avertissement de hameçonnage comprend une fonctionnalité de validation permettant à l'utilisateur de déclencher le 2FA à partir du dispositif récepteur.

15. Un ou plusieurs supports de stockage d'informations lisibles par machine non transitoires comprenant une ou plusieurs instructions qui, lorsqu'elles sont exécutées par un ou plusieurs processeurs matériels, amènent :
l'initiation, pour chaque message parmi une pluralité de messages reçus d'un ou plusieurs expéditeurs associés à un ID d'expéditeur et des dispositifs expéditeurs équipés de géocapteurs, d'une vérification d'infrastructure de profil d'expéditeur (SPF) en vérifiant des enregistrements stockant des noms de domaine autorisés, via un module de sécurité utilisable de module d'extension exécuté par les un ou plusieurs processeurs matériels d'un serveur d'échange et de communication de messages, dans lequel l'ID d'expéditeur étiqueté comme SPF-fail indique qu'un nom de domaine associé à l'ID d'expéditeur appartient à une adresse IP de domaine non autorisée, dans lequel une SPF stocke un enregistrement légal d'une pluralité de domaines et des détails de propriétaire et d'organisation de domaine associés ;
la modification des enregistrements avec un ensemble d'en-têtes personnalisés comprenant une pluralité de paramètres associés à un profil de dispositif expéditeur, dans lequel la pluralité de paramètres comprend un géocodage, un type de dispositif, un profil de type de dispositif, un type de capteur, un profil de type de capteur et des services de positionnement et de synchronisation en temps réel précis reçus d'agences de satellites ;
l'analyse des un ou plusieurs ID d'expéditeur étiquetés avec SPF-fail conjointement avec un ou plusieurs de l'ensemble d'en-têtes personnalisés en effectuant l'une parmi :
(i) l'initiation d'une authentification à deux facteurs (2FA), si le message est associé à au moins l'une parmi une communication de courrier de masse et une adresse IP de domaine non autorisée, la 2FA comprenant :
la communication avec un propriétaire de domaine pour confirmer l'autorisation de l'adresse IP de domaine non autorisée, dans lequel le domaine est classé comme indésirable si l'autorisation n'est pas confirmée, et l'identification de l'expéditeur associé au domaine indésirable comme malveillant et la mise en quarantaine du message ;
(ii) le dépouillement du corps du message, si le message n'appartient pas à la communication de courrier de masse et n'a pas de nom de domaine suspecté, et la génération d'une somme de contrôle pour déduire la présence de la communication de courrier de masse en utilisant une technique de réussite de somme de contrôle, dans lequel si les réussites sont au-delà d'un décompte de seuil, l'expéditeur est identifié comme potentiellement malveillant ; et
(iii) si l'adresse IP de domaine est détectée comme étant mobile sur la base du géocode associé au dispositif expéditeur présent dans l'ensemble d'en-têtes personnalisés et capturé dans l'en-tête de message, identifier l'expéditeur comme potentiellement malveillant ;
le traitement du message en utilisant une ingénierie rapide, par un premier LLM conjointement avec une base de données de permutations de domaine d'hameçonnage, si l'expéditeur du message est identifié comme potentiellement malveillant, dans lequel le traitement comprend :
(i) l'analyse du corps de message pour fournir des raisons pour l'expéditeur indiqué comme malveillant, dans lequel les raisons sont en langage naturel et en langage interprétable par machine ;
(ii) le traitement itératif des raisons pour générer des raisons courtes à l'exclusion des jargons techniques à incorporer dans le corps du message ;
(iii) la génération d'une image en utilisant des modèles de texte à image, dans lequel l'image est indicative d'un courrier potentiellement malveillant et d'un sentiment dans le courrier ; et
(iv) l'inclusion d'un avertissement indiquant que l'adresse IP est mobile et non fixe ; et
la modification de l'instance de module d'objet de document (DOM) pour le message pour incorporer les résultats traités du LLM associés à des avertissements de hameçonnage, dans lequel le message est affiché à un récepteur sur un dispositif récepteur avec un ou plusieurs avertissements de hameçonnage, dans lequel les avertissements de hameçonnage sont affichés au niveau des nœuds DOM sur la base de positions indiquées par le LLM, et dans lequel les avertissements de hameçonnage sous la forme d'un message texte sont affichés avec un changement de la face de type de police avec des modèles de police selon un facteur de forme de dispositif d'un dispositif récepteur.
